# EUROPÄISCHE PATENTSCHRIFT

(11) **EP 3 908 422 B1**
(45) Veröffentlichungstag und Bekanntmachung des Hinweises auf die Patenterteilung: **30.09.2026**
(21) Anmeldenummer: 19804621.1
(22) Anmeldetag: 28.10.2019
(51) Int. Cl.: B23K 26/03, B23K 26/046, G01B 11/06, G01B 11/24

(54) **VERFAHREN UND VORRICHTUNG ZUR KONTROLLIERTEN LASERBEARBEITUNG EINES WERKSTÜCKS MITTELS KONFOKALER ABSTANDSMESSUNG**
METHOD AND DEVICE FOR THE CONTROLLED LASER MACHINING OF A WORKPIECE BY MEANS OF CONFOCAL DISTANCE MEASUREMENT
PROCÉDÉ ET DISPOSITIF POUR LE TRAITEMENT AU LASER CONTRÔLÉ D'UNE PIÈCE AU MOYEN D'UNE MESURE DE DISTANCE CONFOCALE

(30) Priorität: 07.01.2019 DE 102019100244; 14.06.2019 DE 102019116309
(43) Veröffentlichungstag der Anmeldung: 17.11.2021
(73) Patentinhaber: Precitec Optronik GmbH, 63263 Neu-Isenburg (DE)
(72) Erfinder: DIETZ, Christoph, 63179 Obertshausen (DE)
(74) Vertreter: Schweiger, Martin
(86) Internationale Anmeldenummer: PCT/DE2019/100927
(87) Internationale Veröffentlichungsnummer: WO 2020/143861

(56) Entgegenhaltungen:
- DE-A1- 10 155 203
- DE-A1- 102006 046 370
- DE-A1- 102016 219 632
- US-A1- 2016 000 535
- US-B1- 6 713 718
- US-B2- 8 000 022
- US-B2- 8 797 654

## Beschreibung

Die vorliegende Erfindung betrifft ein Verfahren sowie eine Vorrichtung zur Laserbearbeitung eines Werkstücks. Insbesondere betrifft die vorliegende Erfindung ein Verfahren zur kontrollierten Bearbeitung eines Werkstücks, und eine Vorrichtung zur kontrollierten Bearbeitung eines Werkstücks entsprechend dem Oberbegriff der Ansprüche 1 und 13, siehe z.B. US 6 713 718 B1.

Es sind Verfahren bekannt, in welchen Werkstücke mit einem Laserstrahl bzw. Laserlichtstrahl bearbeitet werden. Auch Vorrichtungen zur Durchführung solcher Verfahren sind bekannt.

Für eine präzise Bearbeitung eines Werkstücks mit einem Laserstrahl ist eine genaue Positionierung des Werkstücks bzw. eine genaue Justage von entsprechenden Laserbearbeitungsvorrichtungen erforderlich, was bei den bekannten Verfahren und mit den bekannten Vorrichtungen nur eingeschränkt möglich ist.

Eine Aufgabe von Ausführungsformen der vorliegenden Erfindung ist es, ein verbessertes Verfahren sowie eine verbesserte Vorrichtung für eine kontrollierte Laserbearbeitung von Werkstücken bereitzustellen, welche sich durch eine hohe Bearbeitungspräzision und durch eine einfache Bauweise der Vorrichtung auszeichnet.

Zur Lösung der Aufgabe wird gemäß einem ersten Aspekt der Erfindung ein Verfahren zur kontrollierten Bearbeitung eines Werkstücks bereitgestellt, siehe Anspruch 1. . Das Verfahren umfasst inter alia ein Fokussieren eines Laserstrahls bzw. Bearbeitungslichtstrahls zur Erzeugung eines Laserfokussierungspunktes an einer Zielstelle des zu bearbeitenden Werkstücks mittels einer Laserzieloptik. Zur Erzeugung des Laserstrahls kann insbesondere ein in dem nahinfraroten Spektralbereich emittierender Festkörperlaser, wie ein YAG-Laser oder ein Faserlaser, sowie ein Gaslaser, wie zum Beispiel ein CO2-Laser, verwendet werden.

Die Laserzieloptik kann insbesondere als eine Fokussier- und Ausrichtungsoptik ausgebildet sein, die ein gezieltes Ausrichten und das Fokussieren des Laserstrahls ermöglicht. Die Laserzieloptik kann insbesondere als ein Laser-Strahl-Scanner, speziell als ein Galvoscanner ausgebildet sein, wobei die Ausrichtung des Laserstrahls mit elektrisch ansteuerbaren Spiegeln erfolgen kann.

Das Verfahren umfasst ein Erfassen von Abstandsmessdaten mittels einer optischen Abstandsmessvorrichtung bzw. eines optischen Sensors zur Ermittlung eines Abstandes zwischen der Zielstelle des zu bearbeitenden Werkstücks und der Laserzieloptik, bzw. einem festen Bezugspunkt oder Bezugsebene der Laserzieloptik.

Das Verfahren umfasst ferner ein Bearbeiten der Zielstelle des zu bearbeitenden Werkstücks mit dem fokussierten Laserstrahl. Das Bearbeiten kann insbesondere Laserschweißen, Laserschneiden und/oder eine andere Laserbearbeitung umfassen.

Gemäß dem Verfahren ist die Abstandsmessvorrichtung als eine optisch-konfokale Abstandsmessvorrichtung mit einer brennweitenvariablen Optik bzw. brennweitenvariablen Messlichtoptik ausgebildet, wobei das Verfahren ein zeitliches Variieren der Brennweite der brennweitenvariablen Messlichtoptik zur Erfassung von Abstandsmessdaten bei unterschiedlichen Brennweitenwerten der brennweitenvariablen Messlichtoptik umfasst.

Durch das zeitliche Variieren der Brennweite der brennweitenvariablen Messlichtoptik kann die Brennweite der brennweitenvariablen Messlichtoptik zwischen einer Minimalbrennweite und einer Maximalbrennweite derart variiert werden, dass ein erwünschter Messbereich definiert wird. Insbesondere kann der Messbereich derart definiert bzw. festgelegt werden, dass auch bei Laserbearbeitungsvorrichtungen mit einer großen Brennweite bzw. mit einer kleinen nummerischen Apertur der Abstand zwischen der Laserzieloptik und der Zielstelle des zu bearbeitenden Werkstücks mit dem optisch-konfokalen Sensor präzise ermittelbar ist. Anhand der ermittelten Abstandsmessdaten kann das Werkstück auf eine kontrollierte und präzise Weise bearbeitet werden.

Die brennweitenvariable Messoptik ermöglicht zudem die Durchführung von Abstandsmessungen mit Optik-Elementen, die keine bzw. nur geringfügige optische Dispersion aufweisen, so dass die für die Laserstrahlführung vorgesehenen optischen Elemente, die insbesondere keine oder geringe optische Dispersion aufweisen, auch für die Strahlführung des Messlichts verwendet werden können.

Das Verfahren umfasst auch ein Positionieren des zu bearbeitenden Werkstücks bezüglich des Laserfokuspunktes basierend auf den erfassten Abstandmessdaten. Das Positionieren des zu bearbeitenden Werkstücks umfasst eine Änderung der räumlichen Position und/oder der räumlichen Orientierung des Werkstücks bzw. der gesamten Laserbearbeitungsvorrichtung.

Alternativ oder zusätzlich entsprechend der Erfindung kann das Positionieren ein Nachfokussieren des Laserstrahls umfassen. Somit kann das zu bearbeitende Werkstück erforderlichenfalls nachpositioniert bzw. der Laser nachjustiert werden, so dass eine präzise Bearbeitung des zu bearbeitenden Werkstücks ermöglicht wird.

Die Laserzieloptik der Laserbearbeitungsvorrichtung kann einen Teil der Messlichtoptik der Abstandsmessvorrichtung bilden. Insbesondere kann das Messlicht derart an den Strahlengang des Laserlichtstrahls angekoppelt werden, dass der Messlichtstrahl wenigstens abschnittsweise koaxial zu dem Laserlichtstrahl verläuft.

Durch die Verwendung der Laserzieloptik der Laserbearbeitungsvorrichtung für die Messlichtoptik der Abstandsmessvorrichtung kann die Anzahl der für die Durchführung des Verfahrens erforderlichen optischen Komponenten reduziert und somit der optische Aufbau vereinfacht werden. Somit kann ein Abstandssensor insbesondere in eine bereits bestehende Laserbearbeitungsanlage auf einfache Weise integriert werden.

Wenigstens einige der Verfahrensschritte können an mehreren Zielstellen des zu bearbeitenden Werkstücks durchgeführt bzw. wiederholt werden. Durch die Wiederholung der Verfahrensschritte an mehreren Stellen kann die Positionierung des zu bearbeitenden Werkstücks nachkontrolliert und ggf. korrigiert werden.

In einigen Ausführungsformen umfasst das Erfassen von Abstandsmessdaten ein Erfassen einer Intensität eines von dem Werkstück zurückreflektierten Messlichts, wobei der Abstand anhand eines zeitlichen Verlaufs der Intensität des von dem Werkstück zurückreflektierten Messlichts ermittelt wird.

Insbesondere bei einer kontrollierten zeitlichen Variation der Brennweite der brennweitenvariablen Messoptik können die Zeitpunkte der Erfassung der Intensität zu bestimmten Brennweiten der brennweitenvariablen Messoptik und somit zu Positionen des Messlichtfokuspunkts zugeordnet werden, woraus auf den Abstand zwischen der Laserzieloptik und der Zielstelle zurückgeschlossen werden kann. Denn das Intensitätsmaximum tritt dann auf, wenn die Fokusebene des Messlichts mit der Oberfläche des zu bearbeitenden Werkstücks bzw. des Messobjekts zusammenfällt. In einem solchen Fall wird der auf der Oberfläche des zu bearbeitenden Werkstücks erzeugte Messlichtfleck aufgrund der konfokalen Lichtführung der Abstandsmessvorrichtung an einer fotodetektorseitig angeordneten Blende bzw. Lichtkoppelstelle, welche auch als Lichtaustrittsblende für die Messlichtquelle fungiert, abgebildet, so dass ein Intensitätsmaximum mit dem Fotodetektor detektiert wird.

Als Messlicht kann ein breitbandiges Infrarotlicht, insbesondere Nahinfrarotlicht verwendet werden. Insbesondere kann zur Erzeugung des Messlichts eine nahinfrarote LED (Light Emitting Diode) mit einer Peak-Wellenlänge zwischen 900 nm und 1000 nm, insbesondere 940 nm und 960 nm, und mit einer spektralen Halbwertsbreite zwischen 40 nm und 60 nm, insbesondere zwischen 45 nm und 55 nm, eingesetzt werden.

Ein solches LED-Messlicht ist ausreichend breitbandig, um störende Interferenzen bzw. Speckleeffekte zu vermeiden bzw. zu reduzieren. Andererseits ist ein solches LED-Messlicht schmalbandig genug, um unerwünschte Dispersionseffekte, wie chromatische Fokusverschiebung bzw. Fokusshift, zu unterdrücken bzw. gering zu halten.

Außerdem können für die Abstandsmessung mit einem nahinfraroten Messlicht die optischen Komponenten der Laserbearbeitungsvorrichtung, beispielsweise Spiegel und/oder Linsen der Laserzieloptik, verwendet werden, die für den nahinfraroten Spektralbereich ausgelegt sind.

Das zeitliche Variieren der Brennweite der brennweitenvariablen Messoptik kann ein Durchstimmen, insbesondere ein zyklisches Durchstimmen, der Brennweite der brennweitenvariablen Messoptik zur Erfassung der Abstandsmessdaten bei unterschiedlichen Brennweiten der brennweitenvariablen Messoptik umfassen. Beim Durchstimmen der Brennweite wird ein Brennweitenbereich der brennweitenvariablen Messoptik zwischen einer Minimalbrennweite und einer Maximalbrennweite abgedeckt, so dass der Fokuspunkt der Messoptik den gesamten Messbereich des optischen Sensors abscannt. Durch das zyklische Durchstimmen der Brennweite der brennweitenvariablen Messoptik kann die Auswertung der erfassten Abstandsmessdaten mit dem zeitlichen Variieren der Brennweite synchronisiert werden, so dass eine eindeutige und zuverlässige Zuordnung der erfassten Messdaten zu den zu ermittelnden Abständen erleichtert wird. Insbesondere kann in einem Zyklus bzw. in einem Messtakt anhand der Variation des Fokusabstands des Messlichts ein, insbesondere ein einziger, Abstandswert bzw. Abstand zur Oberfläche des zu bearbeitenden Messstücks bestimmt werden.

In einigen Ausführungsformen liegt der Messstrahlfokus auf der Oberfläche des Messobjekts bzw. des zu bearbeitenden Werkstücks an zwei verschiedenen Zeitpunkten innerhalb eines Zyklus, so dass der Reflex vom Messlichtfleck auf der Oberfläche des zu bearbeitenden Werkstücks scharf auf das Faserende bzw. die Lichtkoppelstelle abgebildet wird, was ein Intensitätsmaximum bei dem durch den Fotodetektor erfassten Licht verursacht. Über einen vorbekannten bzw. durch Kalibrierungsmessungen ermittelbaren Zusammenhang zwischen Zykluszeitpunkten und Positionen des Fokuspunktes des Messlichts kann anhand der Zeitpunkte, an denen Intensitätsmaxima des durch den Fotodetektor erfassten Lichtes beobachtet werden, der Abstand des zu bearbeitenden Werkstücks bestimmt werden.

Das Verfahren kann ferner ein Durchführen einer Kalibriermessung zur Ermittlung eines Zusammenhangs zwischen Zykluszeitpunkt und Abstand umfassen. Der durch die Kalibriermessung ermittelte Zusammenhang zwischen Zykluszeitpunkt und Abstand kann die Zuverlässigkeit und die Genauigkeit der Auswertung der Abstandsmessdaten verbessern, so dass aus dem Zeitpunkt des Intensitätsmaximums in einem Zyklus der zu ermittelnde Abstand eindeutig und zuverlässig berechnet werden kann.

Die Kalibriermessung kann ein Erfassen von Reflexen einer der brennweitenvariablen Optik nachgeschalteten Meniskuslinse, insbesondere an unterschiedlichen Zykluszeitpunkten, umfassen. Die Meniskuslinse weist eine konkave Oberfläche und eine konvexe Oberfläche auf. Die Meniskuslinse kann insbesondere derart angeordnet sein, dass beim Durchstimmen der brennweitenvariablen Optik, das von der konkaven Oberfläche zurückreflektierte Licht und das von der konvexen Oberfläche zurückreflektierte Licht abwechselnd an einer Lichtkoppelstelle gebündelt wird, was jeweils einen messbaren Intensitätspeak des in die Lichtfaser eingespeisten Lichts verursacht. Die zeitlichen Positionen dieser Peaks innerhalb eines Durchstimmzyklus entsprechen wohldefinierten Brennweiten der brennweitenvariablen Optik, so dass anhand der zeitlichen Positionen dieser Intensitätspeaks bzw. Kalibrierpeaks die brennweitenvariable Optik bzw. die Abstandmessvorrichtung präzise kalibriert werden kann.

In einigen Durchführungsformen umfasst die Kalibriermessung eine Messung eines zweidimensionalen Rasters von Lateralpositionen des Scanners bzw. der Laserzieloptik. An dem zweidimensionalen Raster erfasste Abstandsmessdaten können dann zur Kalibrierung der Abstandsmessvorrichtung verwendet werden.

Das Erfassen der Abstandsmessdaten kann an mehreren Stellen bzw. Messstellen an der Zielstelle erfolgen. Die Anordnung einer Messstelle an der Zielstelle bedeutet in diesem Kontext, dass die Messstelle in der, an der oder um die Zielstelle herum angeordnet sein kann. Durch die Erfassung der Abstandmessdaten an mehreren Messstellen an der Zielstelle kann die Fehleranfälligkeit der Messungen durch Mittelwertbildung reduziert werden. Durch die Erfassung der Abstandsmessdaten an mehreren Messstellen kann zudem der Einfluss von Speckles auf die Messergebnisse reduziert werden. Denn die auf die Speckles zurückzuführenden lokalen Intensitätsschwankungen des von dem zu bearbeitenden Werkstück zurückreflektierten Lichts lassen sich durch die Messung an mehreren Messstellen herausmitteln.

Die Erfassung der Abstandsmessdaten an mehreren Messstellen kann sequenziell bzw. zeitlich hintereinander, insbesondere innerhalb eines Messtakts erfolgen. Während eines Messtaktes können somit Abstandsmessdaten von verschiedenen Messstellen eingesammelt werden, so dass ein gemittelter Abstand schnell und mit wenig Rechenaufwand ermittelt werden kann.

In einigen Ausführungen erfolgt die Erfassung der Abstandsmessdaten an mehreren Stellen entlang eines Scan-Wegs an der Zielstelle. Der Scan-Weg kann insbesondere so gewählt werden, dass aus den entlang des Scan-Wegs erfassten Abstandsmessdaten auf den Zielstellenabstand zurückgeschlossen werden kann.

Der Scan-Weg kann die Form eines die Zielstelle des zu bearbeitenden Werkstücks umschließenden Kreises aufweisen. Insbesondere kann der Messkreis einen mit dem Laserspot vergleichbaren Bahnradius aufweisen. Die entlang des Messkreises erfassten Abstandsmessdaten ergeben eine Datenbasis, die eine effiziente Reduzierung des Messfehlers durch die Mittelwertbildung ermöglicht.

Der Scan-Weg kann die Form einer auf die Zielstelle des zu bearbeitenden Werkstücks zentrierten Spirale aufweisen. Insbesondere kann der Mittelpunkt der Spirale mit der Zielstelle zusammenfallen. Aufgrund des spiralförmigen Scan-Wegs können die Abstandsmessdaten von einer besonders großen Oberfläche erfasst werden, so dass der Mittelungseffekt verstärkt wird und die Störungsanfälligkeit der Messung verringert werden kann.

In einigen Durchführungsformen erfolgt die Erfassung der Abstandsmessdaten an mehreren Messstellen im Wesentlichen gleichzeitig, insbesondere innerhalb einer Messtakte, wobei die Ermittlung des Abstands anhand von physikalisch gemittelten Abstandsmessdaten erfolgt.

Die physikalische Mittelung der Abstandsmessdaten bedeutet insbesondere, dass die Abstandsermittlung nicht für jede Messstelle separat erfolgt, um beispielsweise aus den ermittelten Abständen einen mittleren Abstandswert zu bilden. Die physikalische Mittelung bedeutet, dass die Gesamtheit der an den mehreren Messstellen der Zielstelle erfassten Abstandsmessdaten, insbesondere Intensitätsmessdaten des von dem zu bearbeitenden Werkstück zurückreflektierten Messlichts, in die Ermittlung des Abstands der Zielstelle eingehen, so dass für die Gesamtheit der Messstellen ein einziger Abstandswert ermittelt wird. Aufgrund der physikalischen Mittelung kann die Gesamtheit der an den unterschiedlichen Messstellen einer Zielstelle erfassten Abstandsmessdaten zusammen, insbesondere in einem einzigen Auswerteschritt, ausgewertet werden, so dass der Abstandswert auf eine schnelle und einfache Weise ermittelt werden kann. Das Messlicht kann mittels wenigstens einer, insbesondere als konfokale Blende ausgebildete, Lochmaske mit mehreren Löchern in mehrere Teilmesslichter zur gleichzeitigen Erfassung der Abstandsmessdaten an mehreren Messstellen aufgeteilt werden. Mit der wenigstens einen Lochmaske kann somit die für die Erfassung der Abstandsmessdaten an mehreren Messstellen erforderlichen Teilmesslichter auf einfache Weise erzeugt werden. Die Teilmesslichter können mit einem gemeinsamen Fotodetektor erfasst werden. Die Verwendung des gemeinsamen Fotodetektors für alle Teilmesslichter vereinfacht die Erfassung der Abstandsmessdaten von den mehreren Messstellen. Gleichzeitig mit der Erfassung der Teilmesslichter mit dem gemeinsamen Fotodetektor erfolgt eine physikalische Mittelung der Abstandsmessdaten bzw. Lichtintensitäten. Denn der gemeinsame Fotodetektor unterscheidet die von den unterschiedlichen Messstellen zurückreflektierten Lichter nicht. Die Mittelung der Abstandsmessdaten erfolgt somit automatisch, ohne dabei einen Rechenschritt ausführen zu müssen.

Nach einem zweiten Aspekt der Erfindung ist eine Vorrichtung zur kontrollierten Bearbeitung eines Werkstücks entsprechend Anspruch 13 definiert.

Die Vorrichtung umfasst eine Laserlichtquelle zur Erzeugung einer Laserlichtstrahls zur Bearbeitung bzw. Laserbearbeitung des zu bearbeitenden Werkstücks. Zur Erzeugung des Laserstrahls kann insbesondere ein in dem nahinfraroten Spektralbereich emittierender Festkörperlaser, wie ein YAG-Laser oder ein Faserlaser, sowie ein Gaslaser, beispielsweise ein CO2-Laser, verwendet werden.

Die Vorrichtung umfasst ferner eine Laserzieloptik zum Fokussieren des Laserlichtstrahls zu einem Laserlichtfokuspunkt an einer Zielstelle des zu bearbeitenden Werkstücks. Die Laserzieloptik kann insbesondere als eine Fokussier- und Ausrichtungsoptik ausgebildet sein, die ein gezieltes Ausrichten und das Fokussieren des Laserstrahls ermöglicht. Die Laserzieloptik kann insbesondere als ein Laser-Strahl-Scanner, speziell als ein Galvoscanner ausgebildet sein, wobei die Ausrichtung des Laserstrahls mittels elektrisch gesteuerter Spiegel erfolgen kann.

Die Vorrichtung umfasst auch eine Abstandsmessvorrichtung zur Ermittlung eines Abstandes zwischen der Zielstelle des zu bearbeitenden Werkstücks und der Laserzieloptik anhand von durch die Abstandsmessvorrichtung erfassten Abstandsmessdaten und eine Positionierungsvorrichtung zum Positionieren des zu bearbeitenden Werkstücks bezüglich des Laserlichtfokuspunktes und/oder Nachfokussieren des Lasers basierend auf den erfassten Abstandsmessdaten.

Die Vorrichtung umfasst ferner eine Auswerte-Steuereinheit, die dazu ausgebildet ist, die erfassten Abstandsmessdaten auszuwerten und die Positionierungsvorrichtung basierend auf den erfassten Abstandsmessdaten anzusteuern.

Die Abstandsmessvorrichtung ist als eine optisch-konfokale Abstandsmessvorrichtung mit einer Messlichtquelle zur Erzeugung einer Messlichts und mit einer brennweitenvariablen Messlichtoptik derart ausgebildet, dass die Brennweite der brennweitenvariablen Messlichtoptik zeitlich variiert werden kann, um die Abstandsmessdaten bei unterschiedlichen Brennweitenwerten der brennweitenvariablen Messlichtoptik zu erfassen.

Durch das zeitliche Variieren der Brennweite der brennweitenvariablen Messlichtoptik kann eine Vergrößerung eines effektiven Messbereichs der Abstandsmessvorrichtung erzielt werden, so dass auch bei Laserbearbeitungsvorrichtungen mit einer großen Brennweite bzw. mit einer kleinen nummerischen Apertur der Abstand zwischen der Laserzieloptik und der Zielstelle des zu bearbeitenden Werkstücks mit dem optisch-konfokalen Sensor präzise ermittelt werden kann.

Die brennweitenvariable Messoptik ermöglicht außerdem, die Durchführung von Abstandsmessungen mit Optik-Elementen ohne bzw. mit geringer optischer Dispersion zu bewerkstelligen, so dass die für die Laserstrahlführung erforderlichen optischen Elemente, die insbesondere keine oder geringe optische Dispersion aufweisen, auch für die Strahlführung des Messlichts verwendet werden können.

Die Messlichtoptik der Abstandsmessvorrichtung kann wenigstens einen Teil der Laserzieloptik umfassen.

Durch die Verwendung der Laserzieloptik für die Messlichtoptik der Abstandsmessvorrichtung kann die Anzahl von erforderlichen optischen Komponenten reduziert bzw. der Aufbau der Vorrichtung deutlich vereinfacht werden. Somit kann ein Abstandssensor auch in eine bereits bestehende Laserbearbeitungsanlage auf einfache Weise integriert werden.

Die Abstandsmessvorrichtung kann einen Fotodetektor zur Erfassung einer Intensität eines von dem zu bearbeitenden Werkstück zurückreflektierten Messlichts umfassen und derart ausgebildet sein, dass der Abstand anhand eines zeitlichen Verlaufs der erfassten Intensität des von dem Werkstück zurückreflektierten Messlichts ermittelbar ist.

Insbesondere bei einer kontrollierten zeitlichen Variation der Brennweite der brennweitenvariablen Messoptik können die Zeitpunkte der Erfassung der Intensität zu bestimmten Brennweiten der brennweitenvariablen Messoptik und somit zu bestimmten Abständen zugeordnet werden, woraus auf den Abstand zwischen der Laserzieloptik und der Zielstelle zurückgeschlossen werden kann.

Als Messlichtquelle kann eine breitbandige Infrarotlichtlichtquelle, insbesondere eine in dem nahinfraroten Spektralbereich emittierende Lichtquelle verwendet werden. Insbesondere kann zur Erzeugung des Messlichts eine nahinfrarote LED mit einer Peak-Wellenlänge von ca. 950 nm und mit einer spektralen Halbwertsbreite von ca. 50 nm eingesetzt werden. Ein solches LED-Messlicht ist ausreichend breitbandig, um störende Interferenzen bzw. Speckleeffekte zu vermeiden bzw. zu reduzieren. Andererseits ist ein solches LED-Messlicht schmalbandig genug, um unerwünschte Dispersionseffekte, wie chromatische Fokusverschiebungen, zu unterdrücken bzw. gering zu halten.

Die brennweitenvariable Messoptik kann als eine durchstimmbare, insbesondere als eine zyklisch durchstimmbare Messoptik ausgebildet sein. Beim Durchstimmen der Brennweite wird ein Brennweitenbereich der brennweitenvariablen Messoptik zwischen einer Minimalbrennweite und einer Maximalbrennweite abgedeckt, so dass der Fokuspunkt der Messoptik den gesamten Messbereich des optischen Sensors, beispielsweise +/- 7 mm, abdeckt. Durch das zyklische Durchstimmen der Brennweite der brennweitenvariablen Messoptik kann die Auswertung mit dem zeitlichen Variieren der Brennweite derart synchronisiert werden, dass eine eindeutige und zuverlässige Zuordnung der erfassten Messdaten zu den zu ermittelnden Abständen ermöglicht wird.

Die brennweitenvariable Optik kann insbesondere in einem divergierenden Teil eines Abbildungssystems der Abstandsmessvorrichtung angeordnet sein. Als divergierender Teil wird ein Teil des Abbildungssystems der Abstandsmessvorrichtung bezeichnet, in dem das Messlichtoptik einen divergierenden Messstrahl bildet. In dem divergierenden Teil der Abbildungssystem kann die brennweitenvariable Messoptik insbesondere derart positioniert werden, dass die freie Apertur der brennweitenvariablen Optik optimal ausgenutzt werden kann.

Die brennweitenvariable Messoptik kann eine brennweitenvariable Linse umfassen. Mit einer brennweitenvariablen Linse, insbesondere mit einer elektrisch ansteuerbaren brennweitenvariablen Linse, kann die Brennweite der Messoptik auf einfache Weise variiert werden. Die freie Apertur der brennweitenvariablen Linse kann einen Durchmesser in dem Bereich zwischen 1 und 10 mm, insbesondere zwischen 2 und 6 mm, aufweisen. Die brennweitenvariable Linse kann insbesondere in der Nähe einer Lichtkoppelstelle bzw. in der Nähe eines Faserendes angeordnet sein, aus dem das Messlicht divergierend austritt.

In einigen Ausführungen umfasst die Vorrichtung die Vorrichtung wenigstens eine Lochmaske mit mehreren Löchern zur Aufteilung des Messlichts in mehrere Teilmesslichter. Mit den Teilmesslichtern können die Abstandsmessdaten an mehreren Messstellen gleichzeitig erfasst werden.

In einer Ausführungsform umfasst die Vorrichtung eine Lichtfaser mit einer Lichtkoppelstelle zum Ein- und Auskoppeln des Messlichts, wobei die wenigstens eine Lochmaske an der Lichtkoppelstelle angeordnet ist. Diese Anordnung der Lochmaske eignet sich für die Vorrichtungen mit einem Faserkoppler, wobei die Lichtkoppelstelle sowohl zum Auskoppeln des von der Messlichtquelle erzeugten Lichts als auch zum Einkoppeln des von dem zu bearbeitenden Werkstück zurückreflektierten Messlichts ausgebildet ist. Die Erfassung der Abstandsmessdaten an unterschiedlichen Messstellen kann in diesem Fall mit einer einzigen Lochmaske auf einfache Weise erfolgen.

Insbesondere kann die Lochmaske direkt auf die Lichtkoppelstelle bzw. auf das Ende der Lichtfaser gesetzt sein. Die Anordnung der Lochmaske an der Lichtkoppelstelle ermöglicht eine effiziente Nutzung der Lochmaske, indem im Wesentlichen das gesamte aus der Lichtkoppelstelle austretende Messlicht durch die Lochmaske erfasst wird.

Die Lichtkoppelstelle bzw. das Ende der Lichtfaser und die Lochmaske können derart dimensioniert sein, dass die Lochmaske im Wesentlichen komplett ausgeleuchtet wird. Damit kann die Fläche der Lochmaske besonders effizient genutzt werden.

In einigen Ausführungsformen weist die Vorrichtung eine erste Lichtfaser mit einem Lichtaustrittsende und eine zweite Lichtfaser mit einem Lichteintrittsende auf, wobei eine erste Lochmaske an dem Lichtaustrittsende und eine zweite Lochmaske an dem Lichteintrittsende angeordnet ist. Diese Anordnung der Lochmasken eignet sich für die Vorrichtungen mit einem Strahlteiler, welcher zum Einkoppeln des von der Messlichtquelle erzeugten Messlichts in das Abbildungssystem der Abstandsmessvorrichtung und zum Auskoppeln des von dem zu bearbeitenden Werkstück zurückreflektierten Messlichts ausgebildet ist.

Die beiden Lochmasken können derart positioniert sein, dass die Löcher der beiden Lochmasken paarweise konfokal aufeinander ausgerichtet sind. Aufgrund der paarweisen konfokalen Ausrichtung der Löcher der beiden Lochmasken werden die durch die Löcher der ersten Lochmaske erzeugten Teilmesslichtstrahlen in den entsprechenden Löchern der zweiten Lochmaske gebündelt, so dass die durch die Lochmasken verursachten Lichtverluste minimiert werden können.

Anstatt einzelner Lichtfasern können Lichtfaserbündel verwenden werden, um eine Vielzahl der Teilmesslichter zur Erfassung der Abstandsmessdaten an unterschiedlichen Messstellen zu erzeugen. Die Lichtfaserbündel liefern dabei bereits eine Vielzahl der Teilmesslichter, so dass die Lochmasken nicht mehr benötigt werden. Die Lichtfaserbündel zur Aufteilung des Messlichts in Teilmesslichter können sowohl in der Vorrichtung mit dem Faserkoppler als auch in der Vorrichtung mit dem Strahlteiler verwenden werden, Durch die Verwendung der Lichtfaserbündel kann somit der Aufbau und die Handhabung der Vorrichtung vereinfacht werden.

In einigen Ausführungsformen weist die Vorrichtung eine Kamera auf, die derart ausgebildet ist, dass mit Hilfe der Kamera die Bearbeitungsstelle des zu bearbeitenden Werkstücks vor, während und/oder nach der Bearbeitung visuell kontrolliert werden kann.

Die Ausführungsbeispiele werden nachfolgend anhand der Zeichnungen näher erläutert, worin gleiche Bezugsziffern zur Bezeichnung gleicher oder vergleichbarer Komponenten verwendet werden.
- Fig. 1: zeigt schematisch eine Vorrichtung zur kontrollierten Bearbeitung eines Werkstücks gemäß einem Ausführungsbeispiel,
- Fig. 2: zeigt eine Lochmaske gemäß einem Ausführungsbeispiel,
- Fig. 3: zeigt eine Lochmaske gemäß einem anderen Ausführungsbeispiel,
- Fig. 4: zeigt eine schematische Seitenansicht auf eine Meniskuslinse gemäß einem Ausführungsbeispiel,
- Fig. 5: zeigt eine schematische Draufsicht auf die Meniskuslinse der Fig. 4,
- Fig. 6: zeigt schematisch einen möglichen Strahlengang in einem Abschnitt der Abstandsmessvorrichtung gemäß einem Ausführungsbeispiel,
- Fig. 7: zeigt schematisch einen anderen möglichen Strahlengang in dem Abschnitt gemäß Fig. 6,
- Fig. 8: zeigt schematisch einen weiteren möglichen Strahlengang in dem Abschnitt gemäß Fig. 6,
- Fig. 9: zeigt einen zeitlichen Verlauf der Intensität eines von einer Meniskuslinse zurückreflektierten Lichts,
- Fig. 10: zeigt schematisch eine Vorrichtung zur kontrollierten Bearbeitung eines Werkstücks gemäß einem anderen Ausführungsbeispiel, und
- Fig. 11: zeigt ein Flussdiagramm eines Verfahrens zur kontrollierten Bearbeitung eines Werkstücks gemäß einem Ausführungsbeispiel.

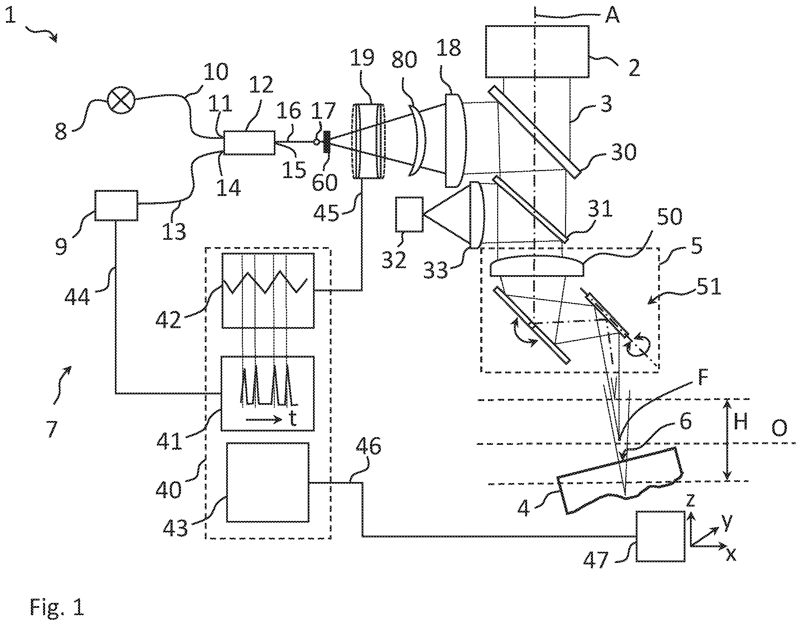

Fig. 1 zeigt schematisch eine Vorrichtung zur kontrollierten Bearbeitung eines Werkstücks gemäß einem Ausführungsbeispiel. Die Vorrichtung 1 umfasst eine Laserlichtquelle 2 zur Erzeugung eines Laserlichtstrahls 3 für die Bearbeitung des zu bearbeitenden Werkstücks 4. Ferner umfasst die Vorrichtung 1 eine Laserzieloptik 5 zum Zielen bzw. zum gezielten Fokussieren des Laserlichtstrahls 3 zu einem Fokuspunkt F an eine Zielstelle 6 des zu bearbeitenden Werkstücks 4.

Die Vorrichtung 1 umfasst eine Abstandsmessvorrichtung 7 zur Ermittlung eines Abstandes zwischen der Zielstelle 6 des zu bearbeitenden Werkstücks 4 und der Laserzieloptik 5. Die Abstandsmessvorrichtung 7 ist als eine optisch-konfokale Abstandsmessvorrichtung ausgebildet und umfasst eine Messlichtquelle 8 zur Erzeugung eines Messlichts und einen Fotodetektor 9 zur Erfassung eines von dem Werkstück 4 zurückreflektierten Messlichts. In diesem Ausführungsbeispiel weist die Abstandsmessvorrichtung 7 einen Abstandsmessbereich H von +/- 7 mm um eine Nullebene O auf.

Die Messlichtquelle 8 ist mit einer ersten Lichtfaser 10 an einer ersten Anschlussstelle 11 eines in Form eines Y-Kopplers ausgebildeten Faserkopplers 12 verbunden. Der Fotodetektor 9 ist mit einer zweiten Lichtfaser 13 an einer zweiten Anschlussstelle 14 des Faserkopplers 12 verbunden. An einer dritten Anschlussstelle 15 des Faserkopplers 12 ist eine dritte Lichtfaser 16 mit einem ersten Ende angeschlossen, wobei das zweite Ende der dritten Lichtfaser 16 als eine Lichtkoppelstelle 17 zum Ein- und Auskoppeln des Messlichts ausgebildet ist. Die erste Lichtfaser 10, die zweite Lichtfaser 13 und die dritte Lichtfaser 16 sind in diesem Ausführungsbeispiel als Multi-Mode-Fasern ausgebildet, die in der Lage sind, ein breitbandiges Licht im nahinfraroten Spektralbereich zu übertragen.

Der Lichtkoppelstelle 17 ist eine Kollimationslinse 18 nachgeschaltet, wobei zwischen der Lichtkoppelstelle 17 und der Kollimationslinse 18 eine brennweitenvariable Linse 19 angeordnet ist. Die Lichtkoppelstelle 17 ist derart ausgebildet, dass das Messlicht aus der Lichtkoppelstelle 17 divergierend austritt, so dass sich in dem Bereich zwischen der Lichtkoppelstelle 17 und der Kollimationslinse 18 ein divergierender Messlichtstrahl ergibt. In diesem Ausführungsbeispiel ist die brennweitenvariable Linse 19 eine elektrisch ansteuerbare brennweitenvariable Linse EL-03-10 der Firma Optotune.

In dem Strahlengang des Laserlichtstrahls 3 ist eine erste Ablenkplatte 30 zum Einkoppeln und zum Auskoppeln des Messlichts in den Strahlengang des Laserlichtstrahls 3 bzw. in die Laserzieloptik 5 angeordnet. Die Ablenkplatte 30 kann derart ausgebildet sein, dass sich das Messlicht in dem Strahlengang des Laserlichtstrahls koaxial zu dem Laserlichtstrahl 3, insbesondere entlang einer für das Messlicht und für den Laserlichtstrahl gemeinsamen optischen Achse A, fortpflanzen kann.

Die Vorrichtung 1 weist ferner eine zweite Ablenkplatte 31 auf, die in dem Strahlengang des Laserlichtstrahls zwischen der ersten Ablenkplatte 30 und der Laserzieloptik 5 positioniert ist. Eine Kamera 32 ist über eine zweite Kollimationslinse 33 und die zweite Ablenkplatte 31 optisch mit der Laserzieloptik 5 derart gekoppelt, dass mit Hilfe der Kamera 32 die Bearbeitungsstelle des zu bearbeitenden Werkstücks visuell kontrolliert werden kann. Die Ablenkplatten 30 und 31 sind als für das Laserlicht durchlässige bzw. teildurchlässige Platten ausgebildet, so dass der Strahlengang des Laserlichtstrahls durch die Ablenkplatten 30 und 31 nicht oder nur geringfügig gestört wird.

In einigen Ausführungsformen wird das Licht für die Kamera 32 mit der Ablenkplatte 31 zwischen dem Laser 2 und der Ablenkplatte 30 abgezweigt. Durch eine Abzweigung des Kameralichts zwischen dem Laser und der Ablenkplatte 30 wird die Abstandsmessung durch die Ablenkplatte 31 für die Abzweigung des Kameralichts nicht beeinträchtigt.

In der in Fig. 1 gezeigten Anordnung wird der Laserlichtstrahl 3 durch die Ablenkplatte 30 bzw. Ablenkplatte 31 und somit transmissiv in die Laserzieloptik 5 eingekoppelt. In alternativen Ausführungsformen wird der Laserlichtstrahl 3 reflektiv bzw. mittels eines Laserstrahlspiegels in die Laserzieloptik 5 eingekoppelt.

Insbesondere kann der Laserstrahl seitlich bzw. senkrecht zu der gemeinsamen optischen Achse A in das optische System der

Vorrichtung 1 reflektiv eingekoppelt werden. In einer solchen Anordnung wäre beispielsweise anstelle der Kamera 32 und der Kollimationslinse 33 der Laser 2 und anstelle der Ablenkplatte 31 ein Laserstrahlspiegel angeordnet. Als Laserstrahlspiegel kann ein für das Messlicht wenigstens teilweise durchlässiger Laserstrahlspiegel eingesetzt werden. Auch andere Konfigurationen des Lichtstrahlengangs sind möglich, in denen die hier beschriebenen Prinzipien verwirklicht werden können. In einer nichteinschränkenden Ausführungsform wird das Messlicht koaxial bzw. entlang der gemeinsamen optischen Achse A in den Strahlengang des Laserstrahls eingekoppelt.

In einigen Ausführungsformen der Laserzieloptik 5 ist die Fokussierlinse 50 dem Spiegelpaar 51 nachgeschaltet, so dass der Laserstrahl 3 erst durch das Spiegelpaar 51 ausgerichtet wird, bevor der ausgerichtete Laserstrahl 3 durch die Fokussierlinse 50 an der Zielstelle fokussiert werden kann.

Die Vorrichtung 1 gemäß dem Ausführungsbeispiel der Fig. 1 weist ferner eine Auswerte-Steuereinheit 40 auf. Die Auswerte-Steuereinheit 40 umfasst eine Auswerteeinheit 41 zur Auswertung der erfassten Abstandsmessdaten, eine Linsensteuereinheit 42 zur Steuerung der Brennweite der brennweitenvariablen Linse 19 sowie eine Positionierungssteuereinheit 43 zur Positionierung des zu bearbeitenden Werkstücks bezüglich des Laserfokuspunktes. Die Auswerteeinheit 41 ist über eine Signalleitung 44 mit einem Ausgang des Fotodetektors 9 verbunden. Die Linsensteuereinheit 42 ist über eine Linsenkontrollleitung 45 mit einem Steuerungsanschluss der brennweitenvariablen Linse 19 verbunden. Die Positioniereinheit 43 ist über eine Positionierungskontrollleitung 46 mit einem Positionierer 47 zur Positionierung des zu bearbeitenden Werkstücks 4 verbunden.

Als Laserlichtquelle wird in diesem Ausführungsbeispiel ein YAG-Laser verwendet, der eine optische Strahlung in dem Wellenlängenbereich zwischen 1030 nm und 1070 nm generiert. Als Laserlichtquelle können auch andere, insbesondere in dem nahinfraroten Spektralbereich emittierender Festkörperlaser oder Gaslaser, beispielsweise CO2-Laser, eingesetzt werden. Die in dem nahinfraroten Spektralbereich emittierenden Laser eignen sich gut für Materialbearbeitung. Denn diese Laser sind in der Lage, die Leistungen im kW-Bereich und die für Materialbearbeitung erforderlichen hohen Leistungsdichten der optischen Strahlung bereitzustellen. Die Vorrichtung 1 umfasst ferner eine Laserleistungssteuerung, die dazu ausgebildet ist, die Leistung des Lasers 2 zu steuern, und eine Laserfokussierungssteuerung mit einer steuerbaren Fokussieroptik, die im Strahlengang des Lasers angeordnet und dazu ausgebildet ist, die Laserfokussierung zu steuern. Die Laserleistungssteuerung und Laserfokussierungssteuerung werden zur Vereinfachung der Darstellung in Fig. 1 nicht dargestellt.

Als Messlichtquelle wird in diesem Ausführungsbeispiel eine breitbandige nahinfrarote LED mit einer Peak-Wellenlänge von ca. 950 nm und mit einer spektralen Halbwertsbreite von ca. 50 nm verwendet. Ein solches LED-Messlicht ist ausreichend breitbandig, um störende Interferenzen bzw. Speckleeffekte zu vermeiden bzw. zu reduzieren. Andererseits ist ein solches LED-Messlicht schmalbandig genug, um unerwünschte Dispersionseffekte, wie chromatische Fokusverschiebung, zu unterdrücken bzw. gering zu halten.

In der Ausführungsform der Fig. 1 umfasst die Laserzieloptik 5 bzw. der Scanner eine Fokussierlinse 50 und ein steuerbares Spiegelpaar 51 zum Ausrichten der fokussierten Strahlung auf die Zielstelle 6 des zu bearbeitenden Werkstücks 4 und ggf. zum Fahren mit dem fokussierten Laserstrahl über ein Bearbeitungsfeld des zu bearbeitenden Werkstücks 4. Das Spiegelpaar 51 kann insbesondere als ein Galvospiegelpaar ausgebildet sein, das elektrisch auf einfache Weise angesteuert werden kann.

Die Fokussierlinse 50 weist eine Brennweite von ca. 180 mm auf. Der Durchmesser des Laserstrahls 3 vor dem Eintritt in die Laserzieloptik 5 beträgt etwa 10 mm. Die Laserzieloptik 5 ist derart dimensioniert, dass der Laserstrahl 3 ein Bearbeitungsfeld von etwa 80 mm X 80 mm bearbeiten kann.

In einigen Ausführungsformen ist die Laserzieloptik 5 als eine telezentrische Laserzieloptik ausgebildet. Durch die telezentrische Ausbildung der Laserzieloptik wird ermöglicht, dass das zu bearbeitende Werkstück in unterschiedlichen Entfernungen von der Vorrichtung mit dem Laserstrahl bearbeitet werden kann.

Der Positionierer 47 kann insbesondere zur Positionierung und/oder Orientierung des zu bearbeitenden Werkstücks 4 bezüglich des Laserstrahlfokuspunktes ausgebildet sein und insbesondere einen oder mehrere Aktuatoren umfassen, mit einem oder mehreren Steuersignalen von der Positionierungssteuereinheit 46 zur Positionierung bzw. zur Orientierung des zu bearbeitenden Werkstücks 4 angesteuert werden können. Die Möglichkeit der Orientierung des Werkstücks wird in Fig. 1 durch Koordinatenachsen symbolisch dargestellt.

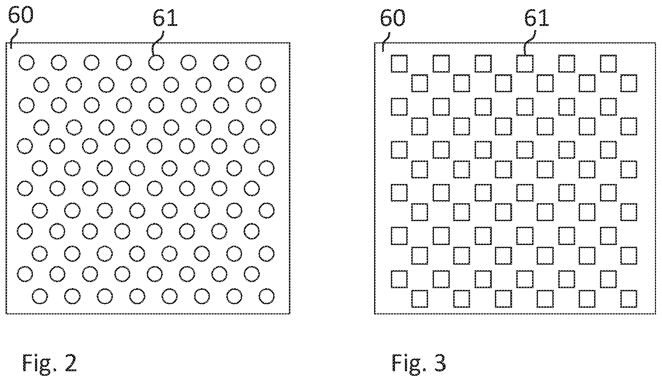

In einigen Ausführungsformen, wie in dem in Fig. 1 dargestellten Beispiel, weist die Vorrichtung 1 eine Lochmaske 60 bzw. Blende auf, welche in dem Strahlengang der Abstandsmessvorrichtung 7 angeordnet ist. Die Lochmaske 60 weist mehrere Löcher 61 auf, die unten in Figuren 2 und 3 deutlich zu sehen sind. Die Lochmaske 60 ist zwischen der Lichtkoppelstelle 17 und der brennweitenvariablen Linse 19 derart positioniert, dass das Messlicht durch die Lochmaske 60 in mehrere Teile zur gleichzeitigen Erfassung der Abstandsmessdaten an mehreren Stellen auf der Oberfläche des zu bearbeitenden Werkstücks 4 aufgeteilt wird. In dem in Fig. 1 gezeigten Ausführungsbeispiel ist die Lochmaske direkt auf das als die Lichtkoppelstelle 17 fungierendes Faserende gesetzt, so dass das Faserende auch als Halterung für die Lochmaske 60 dient.

In einigen Ausführungsbeispielen weist die Lichtfaser, an deren Ende die Lochmaske aufgesetzt wird, einen ausreichenden Durchmesser auf, um die Lochmaske 60 im Wesentlichen vollständig auszuleuchten und das zurückreflektierte Licht im Wesentlichen über alle Löcher 61 der Lochmaske 60 einzufangen.

In einigen Ausführungsbeispielen wird anstatt der Faser 16 mit der Lochmaske 60 ein Faserbündel verwendet, welches ähnlich wie die Faser 16 der Fig. 1 mit einem Faserkoppler gekoppelt ist.

In einigen Ausführungsformen, wie in dem in Fig. 1 dargestellten Beispiel, weist die Vorrichtung 1 zur kontrollierten Bearbeitung eines Werkstücks eine Meniskuslinse 80 auf, welche zwischen der brennweitenvariablen Linse 19 und der Kollimationslinse 18 positioniert ist.

Die Meniskuslinse 80 weist eine im Wesentlichen sphärische konkave Oberfläche 81 und eine im Wesentlichen sphärische konvexe Oberfläche 82 auf. Die konkave Oberfläche 81 bzw. die konkave Seite der Meniskuslinse 80 ist der brennweitenabstimmbaren Linse 19 zugewandt und die konvexe Oberfläche 82 bzw. die konvexe Seite der Meniskuslinse 80 ist der Kollimationslinse 18 zugewandt. In dem gezeigten Ausführungsbeispiel weist die Meniskuslinse 80 in der Mitte ein kreisförmiges Loch 83 auf.

Im Betrieb der Vorrichtung 1 wird ein Teil des in der Messlichtquelle 8 erzeugten Lichts durch die erste Lichtfaser 10, über den Faserkoppler 12 und über die dritte Lichtfaser 16 zu der Lichtkoppelstelle 17 geleitet. Von der Lichtkoppelstelle 17 tritt das Messlicht divergierend aus, wonach das Messlicht durch die brennweitenvariable Linse 19 und die Kollimationslinse 18 hindurchtritt, und durch die Ablenkplatte 30 in den Strahlengang des Laserlichtstrahls 3 eingekoppelt wird. Das in den Strahlengang des Laserlichtstrahls 3 eingekoppelte Messlicht kann dann durch die Laserzieloptik 5 hindurch zu dem zu bearbeitenden Werkstück 4 gelangen.

Beim Eintreffen des Messlichts auf das Werkstück 4 kann ein Teil des Messlichts zurückreflektiert werden und über die Laserzieloptik 5, die Kollimationslinse 18, die brennweitenvariable Linse 19 und die Lichtkoppelstelle 17 in die dritte Lichtfaser 16 gelangen. Ein Teil des Messlichts wird dabei an dem Faserkoppler 12 über die zweite Faser 13 zu dem Fotodetektor 9 abgezweigt. Der Fotodetektor 9 liefert ein Messsignal über die Signalleitung 44 an die Auswerteeinheit 41 zur Auswertung. Die Auswerteeinheit 41 ist dazu ausgebildet, einen zeitlichen Verlauf der Intensität des von dem Fotodetektor 9 erfassten Lichts auszuwerten. Die Auswerteeinheit 41 ist ferner dazu ausgebildet, aus dem zeitlichen Verlauf der Intensität Abstände zwischen der Zielstelle des zu bearbeitenden Werkstücks und der Laserzieloptik abzuleiten.

Die brennweitenvariable Linse 19 kann insbesondere derart zyklisch gesteuert werden, dass die Brechkraft der brennweitenvariablen Linse um beispielsweise +/- 13 Dioptrien durgestimmt wird, wobei der Fokuspunkt des Messlichtes entlang der optischen Achse um ca. +/- 7 mm verschoben wird. An zwei verschiedenen Zeitpunkten innerhalb eines Zyklus liegt der Messstrahlfokus auf der Oberfläche des Messobjekts bzw. des zu bearbeitenden Werkstücks, so dass der Reflex vom Messlichtfleck auf der Oberfläche des zu bearbeitenden Werkstücks scharf auf das Faserende bzw. Lichtkoppelstelle 17 abgebildet wird, was ein Intensitätsmaximum bei dem durch den Fotodetektor erfassten Licht verursacht.

Über einen vorbekannten bzw. durch Kalibrierungsmessungen ermittelbaren Zusammenhang zwischen Zykluszeitpunkten und Positionen des Fokuspunktes des Messlichts kann anhand der Zeitpunkte, an denen Intensitätsmaxima des durch den Fotodetektor erfassten Lichtes beobachtet wird, kann der Abstand des zu bearbeitenden Werkstücks bestimmt werden.

Insbesondere kann die Kalibriermessung zur Ermittlung des Zusammenhangs zwischen Zykluszeitpunk und Abstand der Oberfläche des zu bearbeitenden Werkstücks bereits im Vorfeld bzw. vor der Laserbearbeitung durchgeführt werden. Die Kalibrierungsmessung kann über ein zweidimensionales Raster von Lateralpositionen des Scanners bzw. der Laserzieloptik erfolgen. Anhand des ermittelten Zusammenhangs kann dann aus dem Zeitpunkt des Intensitätsmaximums in einem Zyklus der Abstand der Oberfläche bzw. der Abstand zwischen der Laserzieloptik 5 und der Zielstelle 6 des zu bearbeitenden Werkstücks ermittelt werden.

Die zyklische Variation bzw. Modulation der Brennweite der brennweitenvariablen Linse 19 wird in Fig. 1 durch eine gezackte Kurve in der Linsensteuereinheit 42 symbolisch dargestellt. Der Zusammenhang zwischen den Zyklen der Brennweitenvariation der brennweitenvariablen Linse 19 und dem Auftreten der Intensitätsmaxima wird in Fig. 1 schematisch durch gestrichelte Linien verdeutlicht, die sich zwischen der Sägezahnkurve der Linsensteuereinheit 42 und einer in der Auswerteeinheit 41 dargestellten Intensitätskurve mit der Zeitkoordinate t erstrecken.

Das durch die Lochmaske 60 aufgeteilte Messlicht ermöglicht eine gleichzeitige Erfassung der Abstandsmessdaten an mehreren Stellen auf der Oberfläche des zu bearbeitenden Werkstücks 4. Insbesondere gelingt das von dem Werkstück zurückreflektierte Messlicht ebenfalls durch die Löcher 61 der Lochmaske 60 über die Koppelstelle 17 in die Faser 16, so dass es mit dem Fotodetektor 9 erfasst werden kann. Die von dem Fotodetektor 9 erfasste Lichtintensität entspricht dabei der Gesamtintensität des über die sämtlichen Löcher 61 der Lochmaske 60 eingesammelten von den sämtlichen Messstellen zurückreflektierten Lichts, so dass eine physikalische Mittelung der Intensitätsunterschiede zwischen den von unterschiedlichen Stellen zurückreflektierten Lichts aufgrund der optischen Anordnung stattfindet. Die physikalische Mittelung der verschiedene Löcher 61 der Lochmaske 60 erfassten Lichtintensitäten kann die Auswertung der Messdaten erheblich vereinfachen, da die Abstandermittlung nicht für jede Stelle einzeln erfolgen muss. Vielmehr kann die Abstandsermittlung bereits anhand der physikalisch gemittelten Abstandsmessdaten, insbesondere Intensitätsdaten, für die durch die Lochmaske 60 erzeugten sämtlichen Stellen erfolgen.

Aufgrund der Anordnung der Meniskuslinse 80 kann das von den Oberflächen 81 und 82 der Meniskuslinse 80 zurückreflektierte Licht über die Lichtkoppelstelle 17 in die Faser 16 gelangen und von dem Fotodetektor 9 erfasst werden.

Insbesondere wenn die aus der brennweitenvariablen Linse 19 austretenden Lichtstrahlen senkrecht auf eine der beiden Oberflächen 81 und 82 der Meniskuslinse 80 treffen, wird ein maximaler Anteil des Lichts von der entsprechenden Oberfläche 81 bzw. 82 der Meniskuslinse 80 durch die brennweitenvariable Linse 19 wieder zurück in die Faser 16 reflektiert. Eine derartige Strahlenkonfiguration kann somit anhand eines entsprechenden Intensitätspeaks des zurückreflektierten Lichts erkannt werden, wobei jede der beiden Oberflächen 81 und 82 der Meniskuslinse 80 für einen eigenen Intensitätspeak verantwortlich ist.

In einigen Ausführungsbeispielen ist die Meniskuslinse so dimensioniert, dass die Peaks jeweils zu Beginn bzw. am Ende eines wiederholten Zeitzyklus während des Durchstimmens der brennweitenvariablen Linse 19 auftreten. Die Lage jedes der beiden Peaks entspricht dabei stets jeweils einem konstanten Wert der Brennweite der Brennweitenvariablen Linse 19 und daher konstant demselben Abstand. Unter Einfluss von Temperaturänderungen kann sich insbesondere die Relation zwischen Zeitverlauf und Abstandswert ändern. Signifikanten Einfluss hat die durchstimmbare Linse, so dass sich die Zuordnung zwischen Ansteuerwert und Brennweite der brennweitenvariablen Linse 19 bei Temperaturschwankungen ändern kann. Da die durch die Meniskuslinse 80 verursachten Intensitätspeaks jeweils bei gleicher Brennweite der brennweitenvariablen Linse 19 auftreten, kann die brennweitenvariable Linse 19 bzw. der Zusammenhang zwischen Zeitverlauf und Abstand anhand von diesen Peaks präzise kalibriert werden. Denn im Unterschied zu der brennweitenvariablen Linse 19 weist die Meniskuslinse 80 eine vernachlässigbare Temperaturabhängigkeit auf.

Durch das kreisförmige Loch 83 in der Mitte der Meniskuslinse 80 gehen die Strahlen des Messlichts ungestört durch die Meniskuslinse hindurch, so dass nur die Randstrahlen von der Meniskuslinse 80 zurückreflektiert werden können. Durch die Wahl der Linsenfläche bzw. der Lochgröße lässt sich die Intensität der Reflexe einstellen, so dass die Intensität des von der Meniskuslinse 80 zurückreflektierten Lichts hoch genug ist, um als Kalibriersignal zu dienen, aber auch nicht so hoch, dass das Messsignal bzw. das Intensitätssignal des von dem zu bearbeitenden Objekt zurückreflektierten Messlichts durch die Reflexe der Meniskuslinse überschattet wird. In einigen Ausführungsformen ist das Loch 83 so dimensioniert, dass der Hauptteil des Messlichts ohne Reflexion durch das Loch 83 der Meniskuslinse 80 durchgeht.

In einigen Ausführungsformen ist der Meniskuslinse 80 eine Blende nachgeschaltet, die dazu eingerichtet ist, den inneren Strahlteil des Messlichts durchzulassen und die den äußeren Strahlteil des Messlichts abzuschneiden. Somit können insbesondere die durch die Meniskuslinse 80 beeinflussten Strahlen von der Messung ausgeschlossen werden.

In einigen Ausführungsformen weist die Meniskuslinse 80 kein Loch auf, wobei die Meniskuslinse 80 wenigstens auf einer der beiden Oberflächen 81, 82 eine Beschichtung aufweist. Die Dicke bzw. die Reflektivität der Beschichtung kann so gewählt werden, dass das Messsignal durch die Reflexionsanteile der Meniskuslinse nicht überschattet wird. In einigen Ausführungsbeispielen weist die Meniskuslinse 80 eine Antireflexionsbeschichtung auf, deren Reflexionsanteil in dem Wellenlängenbereich des Messlichts weniger als 4 % beträgt.

In einigen Ausführungsformen weist die Meniskuslinse 80 beides, sowohl das kreisförmige Loch 83 als auch die Beschichtung, auf, wobei die Dimensionierung des kreisförmigen Lochs 83 und die Dicke der Beschichtung so gewählt sein kann, dass ein ausreichend starkes Kalibriersignal erzielt wird, ohne dabei das Messignal zu überschatten bzw. allzu stark zu beeinträchtigen.

Fig. 2 zeigt eine Lochmaske gemäß einem Ausführungsbeispiel.

Die Lochmaske 60 der Fig. 2 ist in Form einer im Wesentlichen rechteckigen Blende ausgebildet und weist eine Mehrzahl von kreisförmigen Löchern 61 auf. Die kreisförmigen Löcher 61 sind in diesem Ausführungsbeispiel im Wesentlichen gleichmäßig über die gesamte Fläche der Blende in einem hexagonalen Raster verteilt. Die Verteilung der Löcher 61 in einem hexagonalen Raster ermöglicht eine hohe Dichte der Löcher, so dass das Messlicht durch die Lochmaske in viele Teile zur Erfassung der Abstandsmessdaten an vielen Messstellen aufgeteilt werden kann. Gleichzeitig ist bei gegebener Dichte der Abstand zwischen benachbarten Löchern bei Wahl eines hexagonalen Rasters maximal, so dass Übersprechen zwischen den Löchern minimal ist.

Fig. 3 zeigt eine Lochmaske gemäß einem anderen Ausführungsbeispiel.

Die Lochmaske 60 der Fig. 3 ist ähnlich wie die Lochmaske 60 der Fig. 2 in Form einer im Wesentlichen rechteckigen Blende ausgebildet und weist eine Mehrzahl von Löchern 61 auf. Im Unterschied zu der Lochmaske 60 der Fig. 2 sind die Löcher 61 der Lochmaske der Fig. 3 rechteckig ausgebildet und sind in einem Schachbrettmuster im Wesentlichen gleichmäßig über die gesamte Fläche der Blende verteilt.

Der Füllgrad der in den Figuren 2 und 3 gezeigten Lochmasken 60 beträgt vorzugsweise zwischen 30 % und 70 %, insbesondere ungefähr 50 %, so dass ungefähr 50 % des auf die Lochmasken einfallenden Lichts durch die Lochmasken hindurchgehen.

Alternativ zu den in den Figuren 2 und 3 gezeigten Ausführungsformen kann die Lochmaske auch im Wesentlichen kreisförmig ausgebildet sein. Eine kreisförmige Lochmaske eignet sich insbesondere gut dafür, am Ende einer Lichtfaser mit einem kreisförmigen Querschnitt präzise aufgesetzt zu werden.

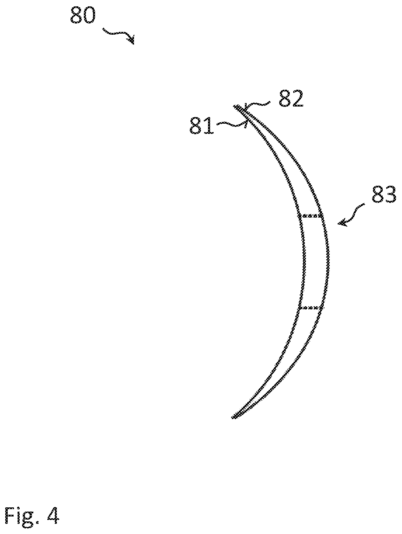

Fig. 4 zeigt eine schematische Seitenansicht auf eine Meniskuslinse gemäß einem Ausführungsbeispiel.

Wie man in der Ansicht der Fig. 4 deutlich erkennen kann, weist die Meniskuslinse 80 eine im Wesentlichen sphärische konkave Oberfläche 81 und eine im Wesentlichen sphärische konvexe Oberfläche 82 auf. In dem gezeigten Ausführungsbeispiel weist die Meniskuslinse 80 in der Mitte ein kreisförmiges Loch 83 auf.

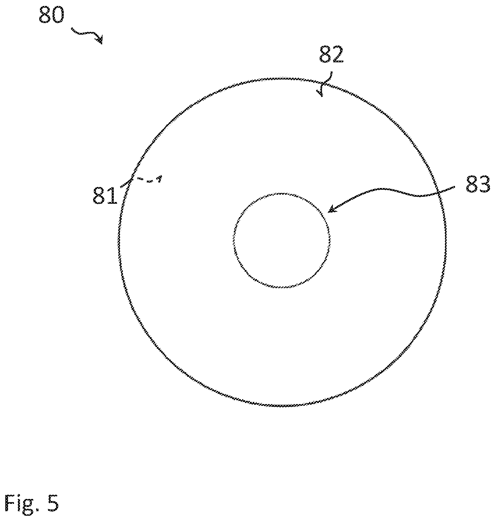

Fig. 5 zeigt eine schematische Draufsicht auf die Meniskuslinse der Fig. 4.

In der Draufsicht der Fig. 5 ist das kreisförmige Loch 83 der Meniskuslinse 80 besonders gut zu erkennen. Wie bereits oben bei der Beschreibung der Fig. 1 erwähnt, kann die Meniskuslinse 80 unterschiedlich ausgebildet sein. Insbesondere kann wenigstens eine der beiden Oberflächen 81, 82 eine Beschichtung aufweisen. Ferner kann die Dimensionierung des kreisförmigen Lochs 83 und/oder die Stärke bzw. die Reflektivität der Beschichtung so gewählt werden, dass die Rückreflexionen an den Oberflächen 81, 82 der Meniskuslinse 80 Kalibrierpeaks ausreichender Intensität ergeben, ohne dabei das Messsignal zu überschatten bzw. die Abstandsmessung zu beeinträchtigen.

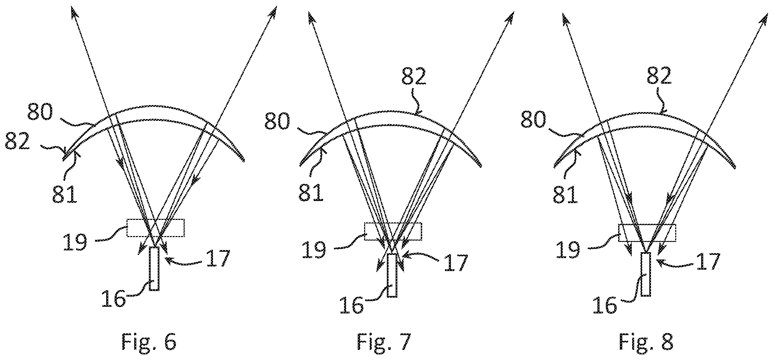

Fig. 6 zeigt schematisch einen möglichen Strahlengang in einem Abschnitt der Abstandsmessvorrichtung gemäß einem Ausführungsbeispiel.

Der in Fig. 6 gezeigte Abschnitt umfasst die brennweitenvariable Linse 19, die Meniskuslinse 19 sowie die Koppelstelle 17 der Lichtfaser 13 gemäß Fig. 1.

Die von der Koppelstelle 17 weg gerichteten langen Pfeile stellen den aus der Lichtkoppelstelle 17 austretenden Messlichtstrahl dar, der durch die brennweitenvariable Linse 19 und auch zum Teil durch die Meniskuslinse 80 hindurch gestrahlt wird. Die von der Meniskuslinse 80 zurück zu der Lichtkoppelstelle 17 gerichteten Pfeile verdeutlichen die von der konkaven Oberfläche 81 bzw. von der konvexen Oberfläche 82 reflektierten Strahlen. Bedingt durch die im Wesentlichen sphärische Krümmung der Oberflächen 81 und 82 werden die zurückreflektierten Strahlen zum jeweiligen Fokuspunkt gebündelt.

In dem in Fig. 6 dargestellten Fall wird das von der konkaven Oberfläche 81 der Meniskuslinse 80 reflektierte Licht an der Lichtaustrittsfläche der Lichtkoppelstelle 17 gebündelt, während der Fokuspunkt des von der konvexen Oberfläche 82 der Meniskuslinse 80 zurückreflektierte Lichts oberhalb von der Lichteintrittsfläche bzw. Lichtkoppelstelle 17 liegt. Der gezeigte Strahlengang kann insbesondere bei einer bestimmten Brennweite der brennweitenvariablen Linse 19 auftreten.

Fig. 7 zeigt schematisch einen anderen möglichen Strahlengang in dem Abschnitt gemäß Fig. 6.

Der Strahlengang der Fig. 7 entspricht im Wesentlichen dem in Fig. 6 dargestellten Strahlengang. Im Unterschied zu dem in Fig. 6 gezeigten Fall, weist die brennweitenvariable Linse 19 einen anderen Wert der Brennweite auf, so dass keiner der beiden zurückreflektierten Strahlen an der Lichtkoppelstelle 17 gebündelt wird.

Fig. 8 zeigt schematisch einen weiteren möglichen Strahlengang in dem Abschnitt gemäß Fig. 6.

Der in Fig. 8 dargestellte Strahlengang entspricht einer Brennweite der brennweitenvariablen Linse 19, wenn das von der konvexen Oberfläche 82 der Meniskuslinse 80 zurückreflektierte Licht an der Lichtaustrittsfläche der Lichtkoppelstelle 17 gebündelt wird, während der Fokuspunkt des von der konkaven Oberfläche 81 der Meniskuslinse 80 zurückreflektierte Lichts unterhalb der von der Lichteintrittsfläche bzw. Lichtkoppelstelle 17 liegt.

Die in Figuren 6, 7 und 8 gezeigten möglichen Strahlenkonfigurationen des Messlichts verdeutlichen die Funktionsweise der Meniskuslinse 80. Wird beispielweise die brennweitenvariable Linse 19 zyklisch durchgestimmt, so wird die Brennweite alle Werte zwischen einer minimalen Brennweite und einer maximalen Brennweite periodisch durchlaufen, und dabei können die in Figuren 6, 7 und 8 dargestellten Strahlenkonfiguration periodisch auftreten. Der in Fig. 7 dargestellte oder ein ähnlicher Strahlengang, wenn keines der von der Meniskuslinse 80 zurückreflektieren Strahlen an der Lichtkoppelstelle 17 gebündelt wird, kann bei einer Vielzahl von Einstellungen der brennweitenvariablen Linse 19 auftreten. Die in den Figuren 6 und 8 dargestellten Strahlenkonfiguration können dagegen nur bei ganz bestimmten Werten der Brennweite der brennweitenvariablen Linse 19 auftreten. Aufgrund der Bündelung des von den Oberflächen 81 und 82 der Meniskuslinse 80 zurückreflektierten Lichtes an der Lichtkoppelstelle 17 der Lichtfaser 13 wird in den in Figuren 6 und 8 dargestellten Strahlenkonfigurationen ein größerer Anteil des von der Meniskuslinse 80 zurückreflektierten Lichts in die Lichtkoppelstelle eingekoppelt als sonst. Diese Erhöhung der eingekoppelten Lichtmenge kann an durch einen entsprechenden Anstieg der durch den Fotodetektor erfassten Lichtintensität detektiert wird. Die entsprechenden Intensitätspeaks können mit einem Fotodetektor, beispielsweise mit dem Fotodetektor 9 in der Anordnung gemäß Fig. 1, erfasst werden und als Kalibrierpeaks zur Kalibrierung der Abstandsmessvorrichtung 7 genutzt werden. Insbesondere kann anhand der zeitlichen Position des jeweiligen Intensitätspeaks auf die entsprechende Brennweite der brennweitenvariablen Linse 19 bzw. auf den entsprechenden Messabstand der Abstandsmessvorrichtung 7 zurückgeschlossen werden.

Der in den Figuren 6, 7 und 8 dargestellte Abschnitt weist keine Lochmaske 60 auf. Die obigen Ausführungen zu den Figuren 6, 7 und 8 zur Funktionsweise der Meniskuslinse 60 gelten entsprechend auch dann, wenn eine Lochmaske 60 zur Aufteilung des Messlichts mehrere Teile und zur Erfassung der Abstandsmessdaten von verschiedenen Stellen verwendet wird, die beispielsweise zwischen der Koppelstelle 17 und der brennweitenvariablen Linse 19 angeordnet sein könnte.

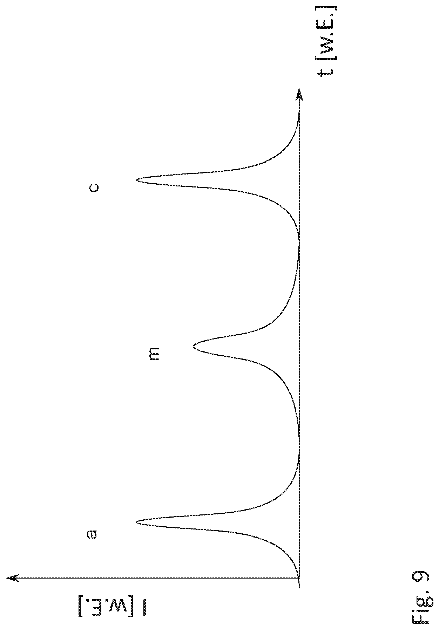

Fig. 9 zeigt einen zeitlichen Verlauf der Intensität eines von einer Meniskuslinse zurückreflektierten Lichts.

Insbesondere stellt Fig. 9 eine zeitliche Abhängigkeit der gemessenen Lichtintensität in der in Figuren 6, 7 und 8 dargestellten Anordnung, wobei die Intensität des in die Lichtfaser 16 eingekoppelten Anteils des von der Meniskuslinse 80 und dem zu bearbeitenden Werkstück 4 zurückreflektierten Lichts während eines Durchstimmzyklus gemessen wird. Ein Durchstimmzyklus entspricht hier einem Verlauf von einem minimalen zu einem maximalen Ansteuerwert bzw. umgekehrt. Die Zeit t und die Intensität I werden in Fig. 9 in willkürlichen Einheiten dargestellt. Bei bestimmten Zeitwerten weist die zeitliche Abhängigkeit der Intensität I(t) distinkte Intensitätspeaks bzw. Kalibrierpeaks auf. Insbesondere weist die Kurve I(t) einen linken scharfen Peak (a), einen rechten scharfen Peak (c) und einen etwas breiteren mittleren Peak (m) auf. Der linke scharfe Peak (a) entspricht der in Fig. 6 dargestellten Strahlenkonfiguration, wenn die Reflexion von der konkaven Oberfläche 81 der Meniskuslinse 80 an der Lichtkoppelstelle 17 der Lichtfaser 16 gebündelt wird und so gebündelt in die Lichtfaser 16 eintritt. Zwischen den beiden Peaks (a) und (c) tritt die in Fig. 7 dargestellte Strahlenkonfiguration auf, wenn die Lichtkoppelstelle 17 zwischen den beiden Fokuspunkten der von der konkaven Oberfläche 81 und von der konvexen Oberfläche 82 der Meniskuslinse 80 zurückreflektierten Lichts liegt. In diesem Fall kann weder die Reflexion von der konkaven Oberfläche 81 noch die Reflexion von der konvexen Oberfläche 82 in die Lichtfaser 16 richtig eingekoppelt werden. In diesem Intervall tritt der Peak (m) auf, welcher von dem zu bearbeitenden Werkstück 4 reflektierten Licht herrührt und die Bestimmung des Abstands des Werkstücks 4 erlaubt (Messpeak). Der rechte Peak (c) entspricht der in Fig. 8 dargestellten Strahlenkonfiguration, wenn die Reflexion von der konvexen Oberfläche 82 der Meniskuslinse an der Lichtkoppelstelle 17 gebündelt in die Lichtfaser 16 gelangt. Insbesondere die scharfen Peaks (a) und (c) am Anfang bzw. am Ende des dargestellten Zyklus weisen jeweils eine gut definierte zeitliche Position auf, so dass sie als Basis für eine präzise Kalibrierung der Abstandsmessvorrichtung dienen können. Anhand des charakteristischen Verlaufs der Intensitätskurve können die Peaks (a) und (c) leicht identifiziert und der jeweiligen Strahlenkonfiguration zugeordnet werden.

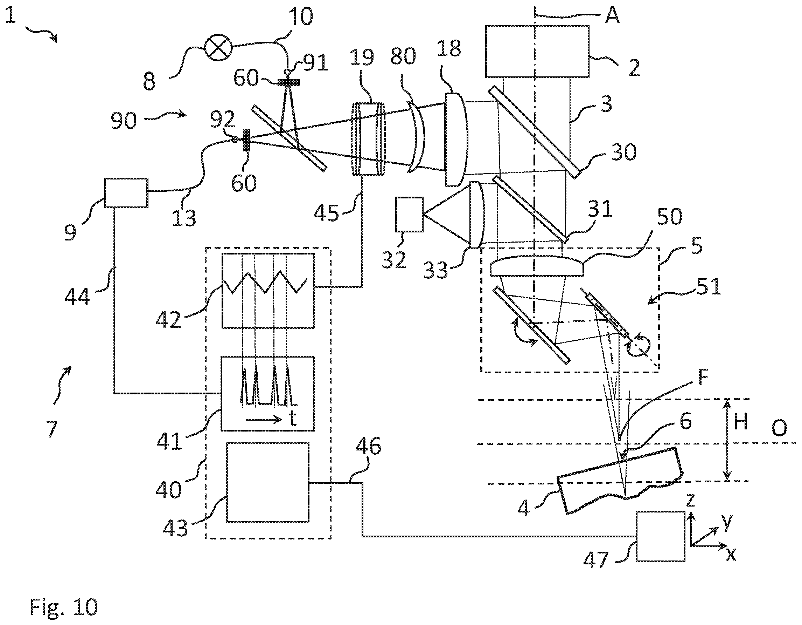

Fig. 10 zeigt schematisch eine Vorrichtung zur kontrollierten Bearbeitung eines Werkstücks gemäß einem anderen Ausführungsbeispiel. Die Vorrichtung 1 der Fig. 10 entspricht im Wesentlichen der in Fig. 1 dargestellten Vorrichtung 1, wobei sie statt eines Faserkopplers einen Strahlteiler 90 umfasst, der zum Einkoppeln des Messlichts über ein Lichtaustrittsende 91 einer ersten Lichtfaser 10 und zum Auskoppeln des von dem zu bearbeitenden Werkstück 4 zurückreflektierten Messlichts ausgebildet ist. Das durch den Strahlteiler 90 ausgekoppelte Messlicht kann in ein Lichteintrittsende 92 einer zweiten Faser 13 eingekoppelt werden, um durch den Fotodetektor erfasst zu werden. Das Lichtaustrittsende 91 der ersten Lichtfaser 10 und das Lichteintrittsende 92 der zweiten Lichtfaser 13 sind konfokal zueinander eingerichtet. Durch die Verwendung des Strahlteilers können die in den Faserkopplern auftretenden störenden Streulichteffekte vermieden werden. In einigen Ausführungsbeispielen ist der Strahlteiler 90 als Strahlteilerwürfel ausgebildet. Die Strahlteilerwürfel sind robust und weisen geringe Streuverluste auf.

In einigen Ausführungsbeispielen weist die Vorrichtung 1 mit dem Strahlteiler 90 wenigstens eine Lochmaske auf.

In dem in Fig. 10 dargestellten Beispiel weist die Vorrichtung 1 zwei im Wesentlichen identisch ausgebildete Lochmasken 60 auf, wobei eine Lochmaske 60 dem Lichtaustrittsende 91 der ersten Faser 10 nachgeschaltet ist und die zweite Lochmaske 60 dem Lichteintrittsende 92 der zweiten Lichtfaser 13 vorgeschaltet ist. Die Lochmasken 60 werden unmittelbar an den Faserenden der ersten und der zweiten Lichtfasern 10, 13 angeordnet.

Die Lochmasken 60 können ähnlich wie die in Figuren 1, 2 und 3 dargestellten und oben beschriebenen Lochmasken ausgebildet sein. Die Lochmasken 60 sind derart angeordnet und ausgerichtet, dass die Löcher 61 (nicht gezeigt) der beiden Lochmasken 60 konfokal aufeinander ausgerichtet sind.

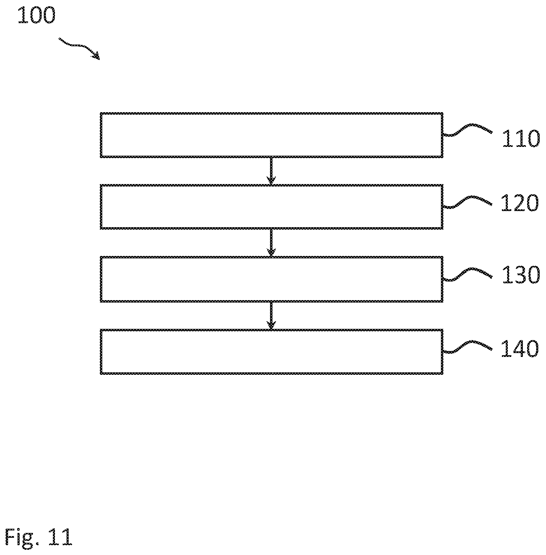

Fig. 11 zeigt ein Flussdiagramm eines Verfahrens zur kontrollierten Bearbeitung eines Werkstücks gemäß einem Ausführungsbeispiel.

Das Verfahren 100 zur kontrollierten Bearbeitung eines Werkstücks umfasst mehrere Schritte, die auch in unterschiedlichen Reihenfolgen und ggf. auch wiederholt durchgeführt werden können. Das Verfahren kann beispielsweise mittels einer Vorrichtung gemäß Fig. 1 oder 2 durchgeführt werden.

In einem Schritt 110 wird ein Laserlichtstrahl zur Erzeugung eines Laserfokuspunktes an einer Zielstelle des zu bearbeitenden Werkstücks fokussiert. Das Fokussieren des Laserlichtstrahls kann insbesondere mit der Laserzieloptik erfolgen, um den Laserstrahl gezielt an der Zielstelle des zu bearbeitenden Werkstücks zu bündeln. Das Fokussieren des Laserlichtstrahls in dem Schritt 110 kann insbesondere bei einer niedrigen Laserleistung erfolgen, so dass in dem Schritt 110 keine oder nur eine geringfügige Materialbearbeitung des zu bearbeitenden Werkstücks 4 erfolgt. Das Fokussieren des Laserlichtstrahls kann auch mittels eines Hilfslasers, beispielsweise eines HeNe-Lasers, erfolgen, dessen Strahl in den Strahlengang des Laserlichtstahls kollinear zu dem Laserstrahl beispielsweise mit einer Ablenkplatte eingekoppelt ist. Als Laserzieloptik bzw. Scanner kann ein Galvoscanner mit zwei schwenkbaren Galvospiegeln verwendet werden.

In einem Schritt 120 werden optische Abstandsmessdaten mittels einer optischen Abstandsmessvorrichtung zur Ermittlung eines Abstandes zwischen der Zielstelle des zu bearbeitenden Werkstücks und der Laserzieloptik bzw. einem Bezugspunkt oder einer Bezugsebene der Laserzieloptik erfasst. Die Abstandsmessvorrichtung kann als eine optisch-konfokale Abstandsmessvorrichtung mit einer Messlichtquelle zur Erzeugung eines Messlichts, insbesondere eines breitbandigen Messlichts in dem nahinfraroten Spektralbereich, und mit einer brennweitenvariablen Messlichtoptik, insbesondere einer brennweitenvariablen Linse, ausgebildet sein, wobei das Verfahren ein zeitliches Variieren der Brennweite der brennweitenvariablen Messlichtoptik zur Erfassung von Abstandsmessdaten bei unterschiedlichen Brennweitenwerten der brennweitenvariablen Messlichtoptik umfassen kann.

Das Erfassen von Abstandsmessdaten kann insbesondere ein Erfassen einer Intensität eines von dem zu bearbeitenden Werkstück zurückreflektierten Messlichts umfassen, so dass der Abstand anhand der Intensität, insbesondere anhand eines zeitlichen Verlaufs der Intensität eines von dem Werkstück zurückreflektierten Messlichts ermittelt wird.

Entsprechend der Erfindung, in einem Schritt 130 wird das zu bearbeitende Werkstück bezüglich des Laserfokuspunktes basierend auf den erfassten Abstandsmessdaten positioniert. Entsprechend der Erfindung ist alternativ oder zusätzlich zu der Positionierung des zu bearbeitenden Werkstücks der Laser nachfokussiert.

In einem Schritt 140 wird die Zielstelle des zu bearbeitenden Werkstücks mit dem fokussierten Laserstrahl bearbeitet.

In einigen Ausführungsformen umfasst das zeitliche Variieren der Brennweite der brennweitenvariablen Messoptik ein Durchstimmen, insbesondere ein zyklisches Durchstimmen, der Brennweite der brennweitenvariablen Messoptik zur Erfassung der Abstandsmessdaten bei unterschiedlichen Brennweiten der brennweitenvariablen Messoptik.

Die Brennweitenvariation der brennweitenvariablen Messoptik kann insbesondere mit Hilfe eines brennweitenvariablen optischen Elements, insbesondere einer brennweitenvariablen Linse erfolgen.

Ein Messzyklus kann typischerweise 25 ms dauern. Während des Messzyklus kann die Brennkraft der brennweitenvariablen Linse beispielsweise in dem Bereich von +/- 13 Dioptrien durchgestimmt werden, wobei der Fokuspunkt des Messlichts um etwa +/-7 mm axial bzw. entlang der optischen Achse der Messlichtoptik verschoben kann.

Bei einem bekannten Zusammenhang zwischen Zykluszeitpunkten und Positionen des Fokuspunktes kann anhand der Intensitätsmaxima der Abstand des zu bearbeitenden Werkstücks bestimmt werden.

Zur Ermittlung des Zusammenhangs zwischen Zykluszeitpunkten und Abständen wird in einigen Ausführungsformen eine Kalibrierungsmessung, insbesondere im Vorfeld der Laserbearbeitung, durchgeführt.

### Bezugszeichenliste

- 1: Vorrichtung
- 2: Laser
- 3: Laserlichtstrahl
- 4: Werkstück
- 5: Laserzieloptik
- 6: Zielstelle

- 7: Abstandsmessvorrichtung
- 8: Messlichtquelle
- 9: Fotodetektor

- 10: erste Lichtfaser
- 11: erste Anschlussstelle
- 12: Faserkoppler
- 13: zweite Lichtfaser
- 14: zweite Anschlussstelle
- 15: dritte Anschlussstelle
- 16: dritte Lichtfaser
- 17: Lichtkoppelstelle
- 18: Kollimationslinse
- 19: brennweitenvariable Linse

- 30: Ablenkplatte
- 31: Ablenkplatte
- 32: Kamera
- 33: Kollimationslinse

- 40: Auswerte-Steuereinheit
- 41: Auswerteeinheit
- 42: Linsensteuereinheit
- 43: Positionierungssteuereinheit
- 44: Signalleitung
- 45: Linsenkontrollleitung
- 46: Positionierungskontrollleitung
- 47: Positionierer

- 50: Fokussierlinse
- 51: Spiegelpaar

- 60: Lochmaske
- 61: Loch

- 80: Meniskuslinse
- 81: konkave Oberfläche
- 82: konvexe Oberfläche
- 83: kreisförmiges Loch

- 90: Strahlteiler
- 91: Ende der ersten Lichtfaser
- 92: Ende der zweiten Lichtfaser

- 100: Verfahren
- 110: Fokussieren
- 120: Erfassen von Abstandsmessdaten
- 130: Positionieren
- 140: Bearbeiten

- A: optische Achse
- F: Fokuspunkt
- H: Messbereich
- O: Nullebene
- t: Zeitkoordinate

- X, y, z: Raumkoordinaten

## Patentansprüche

1. Verfahren zur kontrollierten Bearbeitung eines Werkstücks, umfassend:
- Fokussieren eines Laserlichtstrahls (3) zur Erzeugung eines Laserfokuspunktes (F) an einer Zielstelle (6) des zu bearbeitenden Werkstücks (4) mittels einer Laserzieloptik (5),
- Erfassen von Abstandsmessdaten mittels einer optischen Abstandsmessvorrichtung (7) zur Ermittlung eines Abstandes zwischen der Zielstelle (6) des zu bearbeitenden Werkstücks (4) und der Laserzieloptik (5), und
- Bearbeiten der Zielstelle (6) des zu bearbeitenden Werkstücks (4) mit dem fokussierten Laserlichtstrahl (3),
**dadurch gekennzeichnet, dass**
die Abstandsmessvorrichtung (7) als eine optisch-konfokale Abstandsmessvorrichtung mit einer Messlichtquelle (8) zur Erzeugung eines Messlichts und mit einer brennweitenvariablen Messlichtoptik (19) ausgebildet ist, wobei das Verfahren ein zeitliches Variieren der Brennweite der brenn weitenvariablen Messlichtoptik (19) zur Erfassung von Abstandsmessdaten bei unterschiedlichen Brennweitenwerten der brennweitenvariablen Messlichtoptik (19) umfasst, **dadurch gekennzeichnet, dass**
das Verfahren ferner ein Positionieren des zu bearbeitenden Werkstücks (4) bezüglich des Laserfokuspunktes (F) und/oder Nachfokussieren des Laserlichtstrahls (3) basierend auf den erfassten Abstandsmessdaten umfasst.

2. Verfahren nach Anspruch 1, wobei das Erfassen von Abstandsmessdaten ein Erfassen einer Intensität eines von dem zu bearbeitenden Werkstück (4) zurückreflektierten Messlichts umfasst, und wobei der Abstand anhand eines zeitlichen Verlaufs der Intensität des von dem zu bearbeitenden Werkstück (4) zurückreflektierten Messlichts ermittelt wird.

3. Verfahren nach einem der vorhergehenden Ansprüche, wobei das zeitliche Variieren der Brennweite der brennweitenvariablen Messlichtoptik (19) ein Durchstimmen, insbesondere ein zyklisches Durchstimmen, der Brennweite der brennweitenvariablen Messlichtoptik (19) zur Erfassung der Abstandsmessdaten bei unterschiedlichen Brennweiten der brennweitenvariablen Messlichtoptik (19) umfasst.

4. Verfahren nach Anspruch 3, wobei das Verfahren ferner ein Durchführen einer Kalibriermessung zur Ermittlung eines Zusammenhangs zwischen Zykluszeitpunkt und Abstand umfasst.

5. Verfahren nach Anspruch 4, wobei die Kalibriermessung ein Erfassen von Reflexen einer der brennweitenvariablen Messlichtoptik (19) nachgeschalteten Meniskuslinse (80) umfasst.

6. Verfahren nach einem der vorhergehenden Ansprüche, wobei das Erfassen der Abstandsmessdaten an mehreren Messstellen an der Zielstelle (6) erfolgt.

7. Verfahren nach Anspruch 6, wobei das Erfassen der Abstandsmessdaten an mehreren Messstellen sequenziell innerhalb eines Messtaktes erfolgt.

8. Verfahren nach Anspruch 6 oder 7, wobei die Messstellen entlang eines Scan-Wegs an der Zielstelle (6) angeordnet sind.

9. Verfahren nach Anspruch 8, wobei der Scan-Weg die Form eines die Zielstelle (6) des zu bearbeitenden Werkstücks (4) umschließenden Kreises oder einer auf die Zielstelle (6) des zu bearbeitenden Werkstücks (4) zentrierten Spirale aufweist.

10. Verfahren nach Anspruch 6, wobei das Erfassen der Abstandsmessdaten an mehreren Messstellen im Wesentlichen gleichzeitig erfolgt, und wobei die Ermittlung des Abstands anhand von physikalisch gemittelten Abstandsmessdaten erfolgt.

11. Verfahren nach Anspruch 10, wobei das Messlicht mittels wenigstens einer Lochmaske (60) mit mehreren Löchern (61) in mehrere Teilmesslichter zur gleichzeitigen Erfassung der Abstandsmessdaten an mehreren Messstellen aufgeteilt wird.

12. Verfahren nach Anspruch 11, wobei die Teilmesslichter mit einem gemeinsamen Fotodetektor gleichzeitig erfasst werden.

13. Vorrichtung zur kontrollierten Bearbeitung eines Werkstücks, umfassend:
- eine Laserlichtquelle (2) zur Erzeugung eines Laserlichtstrahls (3) zur Bearbeitung des zu bearbeitenden Werkstücks (4), - eine Laserzieloptik (5) zum Fokussieren des Laserlichtstrahls (3) zu einem Laserlichtfokuspunkt (F) an einer Zielstelle (6) des zu bearbeitenden Werkstücks (4),
- eine Abstandsmessvorrichtung (7) zur Ermittlung eines Abstandes zwischen der Zielstelle (6) des zu bearbeitenden Werkstücks (4) und der Laserzieloptik (5) anhand der durch die Abstandsmessvorrichtung (7) erfassten Abstandsmessdaten, und
- eine Positionierungsvorrichtung (47) zum Positionieren des zu bearbeitenden Werkstücks bezüglich des Laserlichtfokuspunktes (F),
**dadurch gekennzeichnet, dass**
die Abstandsmessvorrichtung (7) als eine optisch-konfokale Abstandsmessvorrichtung mit einer Messlichtquelle (8) zur Erzeugung eines Messlichts und mit einer brennweitenvariablen Messlichtoptik derart ausgebildet ist, dass die Brennweite der brennweitenvariablen Messlichtoptik zeitlich variiert werden kann, um die Abstandsmessdaten bei unterschiedlichen Brennweitenwerten der brennweitenvariablen Messlichtoptik zu erfassen, und durch
- eine Auswerte-Steuereinheit (40), die dazu ausgebildet ist, die erfassten Abstandsmessdaten auszuwerten und die Positionierungsvorrichtung (47) basierend auf den erfassten Abstandsmessdaten anzusteuern.

14. Vorrichtung nach Anspruch 13, wobei die Messlichtoptik der Abstandsmessvorrichtung (7) die Laserzieloptik (5) umfasst.

15. Vorrichtung nach Anspruch 13 oder 14, wobei die Abstandsmessvorrichtung (7) einen Fotodetektor (9) zur Erfassung einer Intensität eines von dem zu bearbeitenden Werkstück (4) zurückreflektierten Messlichts umfasst und derart ausgebildet ist, dass der Abstand anhand eines zeitlichen Verlaufs der erfassten Intensität des von dem Werkstück (4) zurückreflektierten Messlichts ermittelbar ist.

16. Vorrichtung nach einem der Ansprüche 13 bis 15, wobei die Messlichtquelle (8) als eine breitbandige Infrarotlichtquelle, insbesondere Nahinfrarotlichtquelle ausgebildet ist.

17. Vorrichtung nach einem der Ansprüche 13 bis 16, wobei die Brennweite der brennweitenvariablen Messlichtoptik (19) durchstimmbar, insbesondere zyklisch durchstimmbar ist.

18. Vorrichtung nach einem der Ansprüche 13 bis 17, wobei die brennweitenvariable Messlichtoptik (19) in einem divergierenden Teil eines Abbildungssystems der Abstandsmessvorrichtung (7) angeordnet ist.

19. Vorrichtung nach einem der Ansprüche 13 bis 18, wobei die brennweitenvariable Messlichtoptik (19) eine brennweitenvariable Linse (19) umfasst.

20. Vorrichtung nach einem der Ansprüche 13 bis 19, wobei die Vorrichtung (1) wenigstens eine Lochmaske (60) mit mehreren Löchern (61) zur Aufteilung des Messlichts in mehrere Teilmesslichter aufweist.

21. Vorrichtung nach Anspruch 20, wobei die Vorrichtung (1) eine Lichtfaser (16) mit einer Lichtkoppelstelle (17) zum Ein- und Auskoppeln des Messlichts umfasst, und wobei die wenigstens eine Lochmaske (60) an der Lichtkoppelstelle (17) angeordnet ist.

22. Vorrichtung nach Anspruch 20, wobei die Vorrichtung eine erste Lichtfaser (10) mit einem Lichtaustrittsende (91) und eine zweite Lichtfaser (13) mit einem Lichteintritts ende (92) aufweist, und wobei eine erste Lochmaske (60) an dem Lichtaustrittsende (91) und eine zweite Lochmaske (60) an dem Lichteintrittsende (92) angeordnet ist.

## Claims

1. Method for controlled machining of a workpiece, comprising:
- focusing a laser light beam (3) to generate a laser focal point (F) at a target position (6) of the workpiece (4) to be machined by means of a laser targeting optics (5),
- acquiring distance measurement data by means of an optical distance measuring device (7) to determine a distance between the target position (6) of the workpiece (4) to be machined and the laser targeting optics (5), and
- machining the target position (6) of the workpiece (4) to be machined with the focused laser light beam (3),
**characterised in that**
the distance measuring device (7) is configured as an optical-confocal distance measuring device with a measuring light source (8) for generating a measuring light and with a measuring light optics (19) with variable focal length, wherein the method comprises varying the focal length of the measuring light optics (19) with variable focal length over time to acquire distance measurement data at different focal length values of the measuring light optics (19) with variable focal length, **characterised in that**
the method further comprises positioning the workpiece (4) to be machined relative to the laser focal point (F) and/or refocusing the laser light beam (3) based on the acquired distance measurement data.

2. Method according to claim 1, wherein acquiring distance measurement data comprises detecting an intensity of a measuring light reflected back from the workpiece (4) to be machined, and wherein the distance is determined based on a temporal variation of the intensity of the measuring light reflected back from the workpiece (4) to be machined.

3. Method according to one of the preceding claims, wherein varying the focal length of the measuring light optics (19) with variable focal length over time comprises tuning, in particular cyclic tuning, of the focal length of the measuring light optics (19) with variable focal length to acquire the distance measurement data at different focal lengths of the measuring light optics (19) with variable focal length.

4. Method according to claim 3, wherein the method further comprises performing a calibration measurement to determine a relationship between a cycle time and the distance.

5. Method according to claim 4, wherein the calibration measurement comprises detecting reflections of a meniscus lens (80) arranged downstream of the measuring light optics (19) with variable focal length.

6. Method according to any one of the preceding claims, wherein the acquisition of the distance measurement data is carried out at a plurality of measuring points at the target position (6).

7. Method according to claim 6, wherein the acquisition of the distance measurement data at a plurality of measuring points is carried out sequentially within a measuring cycle.

8. Method according to claim 6 or 7, wherein the measuring points are arranged along a scan path at the target position (6).

9. Method according to claim 8, wherein the scan path takes the form of a circle enclosing the target position (6) of the workpiece (4) to be machined, or a spiral centred on the target position (6) of the workpiece (4) to be machined.

10. Method according to claim 6, wherein the acquisition of the distance measurement data at a plurality of measuring points is carried out substantially simultaneously, and wherein the determination of the distance is carried out based on physically averaged distance measurement data.

11. Method according to claim 10, wherein the measuring light is divided into a plurality of partial measuring lights by means of at least one perforated mask (60) having a plurality of holes (61) for simultaneous acquisition of the distance measurement data at a plurality of measuring points.

12. Method according to claim 11, wherein the partial measuring lights are detected simultaneously with a common photodetector.

13. Device for controlled machining of a workpiece, comprising:
- a laser light source (2) for generating a laser light beam (3) for machining the workpiece (4) to be machined, - a laser targeting optics (5) for focusing the laser light beam (3) to a laser light focal point (F) at a target position (6) of the workpiece (4) to be machined,
- a distance measuring device (7) for determining a distance between the target position (6) of the workpiece (4) to be machined and the laser targeting optics (5) based on the distance measurement data acquired by the distance measuring device (7), and
- a positioning device (47) for positioning the workpiece to be machined relative to the laser light focal point (F),
**characterised in that** the distance measuring device (7) is configured as an optical-confocal distance measuring device with a measuring light source (8) for generating a measuring light and with a measuring light optics with variable focal length, such that the focal length of the measuring light optics with variable focal length may be varied over time in order to acquire the distance measurement data at different focal length values of the measuring light optics with variable focal length,
and by
- an evaluation control unit (40) which is configured to evaluate the acquired distance measurement data and to control the positioning device (47) based on the acquired distance measurement data.

14. Device according to claim 13, wherein the measuring light optics of the distance measuring device (7) comprises the laser targeting optics (5).

15. Device according to claim 13 or 14, wherein the distance measuring device (7) comprises a photodetector (9) for detecting an intensity of a measuring light reflected back from the workpiece (4) to be machined, and is configured such that the distance may be determined based on a temporal variation of the detected intensity of the measuring light reflected back from the workpiece (4).

16. Device according to any one of claims 13 to 15, wherein the measuring light source (8) is configured as a broadband infrared light source, in particular a near-infrared light source.

17. Device according to any one of claims 13 to 16, wherein the focal length of the measurement light optics (19) with variable focal length is tunable, in particular cyclically tunable.

18. Device according to any one of claims 13 to 17, wherein the measurement light optics (19) with variable focal length is arranged in a diverging part of an imaging system of the distance measuring device (7).

19. Device according to any one of claims 13 to 18, wherein the measurement light optics (19) with variable focal length comprises a lens (19) with variable focal length.

20. Device according to any one of claims 13 to 19, wherein the device (1) comprises at least one perforated mask (60) having a plurality of holes (61) for dividing the measuring light into a plurality of partial measuring lights.

21. Device according to claim 20, wherein the device (1) comprises an optical fibre (16) with a light coupling point (17) for coupling the measuring light in and out, and wherein the at least one perforated mask (60) is arranged at the light coupling point (17).

22. Device according to claim 20, wherein the device comprises a first optical fibre (10) having a light exiting end (91) and a second optical fibre (13) having a light entering end (92), and wherein a first perforated mask (60) is arranged at the light exiting end (91) and a second perforated mask (60) is arranged at the light entering end (92).

## Revendications

1. Procédé pour le traitement contrôlé d'une pièce, comprenant :
- focaliser un faisceau de lumière laser (3) pour générer un point focal laser (F) au niveau d'un emplacement cible (6) de la pièce à traiter (4) à l'aide d'une optique de visée laser (5),
- collecter des données de mesure de distance à l'aide d'un dispositif optique de mesure de distance (7) afin de déterminer une distance entre l'emplacement cible (6) de la pièce à traiter (4) et l'optique de visée laser (5), et
- traiter l'emplacement cible (6) de la pièce à traiter (4) à l'aide du faisceau de lumière laser focalisé (3),
**caractérisé en ce que**
le dispositif de mesure de distance (7) est conçu comme un dispositif de mesure de distance optique confocal comprenant une source de lumière de mesure (8) destinée à générer une lumière de mesure et une optique de lumière de mesure à distance focale variable (19), le procédé comprenant une variation dans le temps de la distance focale de l'optique de lumière de mesure à distance focale variable (19) afin de collecter des données de mesure de distance pour différentes valeurs de distance focale de l'optique de lumière de mesure à distance focale variable (19), **caractérisé en ce que**
le procédé comprend en outre un positionnement de la pièce à traiter (4) par rapport au point focal laser (F) et/ou une refocalisation du faisceau de lumière laser (3) sur la base des données de mesure de distance acquises.

2. Procédé selon la revendication 1, dans lequel la collection de données de mesure de distance comprend une collection d'une intensité d'une lumière de mesure réfléchie par la pièce à traiter (4), et dans lequel la distance est déterminée à partir d'une évolution dans le temps de l'intensité de la lumière de mesure réfléchie par la pièce à traiter (4).

3. Procédé selon l'une des revendications précédentes, dans lequel la variation dans le temps de la distance focale de l'optique de lumière de mesure à distance focale variable (19) comprend un accord, en particulier un accord cyclique, de la distance focale de l'optique de lumière de mesure à distance focale variable (19) pour une collection des données de mesure de distance à différentes distances focales de l'optique de lumière de mesure à distance focale variable (19).

4. Procédé selon la revendication 3, dans lequel le procédé comprend en outre une réalisation d'une mesure d'étalonnage pour déterminer une relation entre un instant du cycle et la distance.

5. Procédé selon la revendication 4, dans lequel la mesure d'étalonnage comprend une détection de reflets d'une lentille ménisque (80) placée en aval de l'optique de lumière de mesure à distance focale variable (19).

6. Procédé selon l'une des revendications précédentes, dans lequel la collection des données de mesure de distance s'effectue en plusieurs points de mesure au niveau de l'emplacement cible (6).

7. Procédé selon la revendication 6, dans lequel la collection des données de mesure de distance en plusieurs points de mesure s'effectue de manière séquentielle au cours d'un cycle de mesure.

8. Procédé selon la revendication 6 ou 7, dans lequel les points de mesure sont disposés le long d'un trajet de balayage au niveau de l'emplacement cible (6).

9. Procédé selon la revendication 8, dans lequel le trajet de balayage a la forme d'un cercle entourant l'emplacement cible (6) de la pièce à traiter (4) ou d'une spirale centrée sur l'emplacement cible (6) de la pièce à traiter (4).

10. Procédé selon la revendication 6, dans lequel la collection des données de mesure de distance en plusieurs points de mesure s'effectue de manière sensiblement simultanée, et dans lequel la détermination de la distance s'effectue à partir de données de mesure de distance moyennées physiquement.

11. Procédé selon la revendication 10, dans lequel la lumière de mesure est divisée, à l'aide d'au moins un masque perforé (60) comportant plusieurs trous (61), en plusieurs lumières de mesure partielles afin de collecter simultanément les données de mesure de distance en plusieurs points de mesure.

12. Procédé selon la revendication 11, dans lequel les lumières de mesure partielles sont détectées simultanément par un photodétecteur commun.

13. Dispositif pour le traitement contrôlé d'une pièce, comprenant :
- une source de lumière laser (2) destinée à générer un faisceau de lumière laser (3) pour le traitement de la pièce à traiter (4), - une optique de visée laser (5) destinée à focaliser le faisceau de lumière laser (3) en un point focal de lumière laser (F) au niveau d'un emplacement cible (6) de la pièce à traiter (4),
- un dispositif de mesure de distance (7) destiné à déterminer une distance entre l'emplacement cible (6) de la pièce à traiter (4) et l'optique de visée laser (5) à l'aide des données de mesure de distance collectées par le dispositif de mesure de distance (7), et
- un dispositif de positionnement (47) destiné à positionner la pièce à traiter par rapport au point focal de lumière laser (F),
**caractérisé en ce que** le dispositif de mesure de distance (7) est conçu comme un dispositif de mesure de distance optique confocal comprenant une source de lumière de mesure (8) destinée à générer une lumière de mesure et une optique de lumière de mesure à distance focale variable, de telle sorte que la distance focale de l'optique de lumière de mesure à distance focale variable puisse être variée dans le temps afin de collecter les données de mesure de distance pour différentes valeurs de distance focale de l'optique de lumière de mesure à distance focale variable,
et par
- une unité de commande d'évaluation (40), qui est conçue pour évaluer les données de mesure de distance collectées et pour commander le dispositif de positionnement (47) sur la base des données de mesure de distance collectées.

14. Dispositif selon la revendication 13, dans lequel l'optique de lumière de mesure du dispositif de mesure de distance (7) comprend l'optique de visée laser (5).

15. Dispositif selon la revendication 13 ou 14, dans lequel le dispositif de mesure de distance (7) comprend un photodétecteur (9) destiné à détecter une intensité d'une lumière de mesure réfléchie par la pièce à traiter (4) et est conçu de telle sorte que la distance puisse être déterminée à partir d'une évolution dans le temps de l'intensité détectée de la lumière de mesure réfléchie par la pièce (4).

16. Dispositif selon l'une des revendications 13 à 15, dans lequel la source de lumière de mesure (8) est conçue comme une source de lumière infrarouge à large bande, en particulier une source de lumière infrarouge proche.

17. Dispositif selon l'une des revendications 13 à 16, dans lequel la distance focale de l'optique de lumière de mesure à distance focale variable (19) est accordable, en particulier de manière cyclique.

18. Dispositif selon l'une des revendications 13 à 17, dans lequel l'optique de lumière de mesure à distance focale variable (19) est disposée dans une partie divergente d'un système de formation d'image du dispositif de mesure de distance (7).

19. Dispositif selon l'une des revendications 13 à 18, dans lequel l'optique de lumière de mesure à distance focale variable (19) comprend une lentille à distance focale variable (19).

20. Dispositif selon l'une des revendications 13 à 19, dans lequel le dispositif (1) comprend au moins un masque perforé (60) comportant plusieurs trous (61) destinés à diviser la lumière de mesure en plusieurs lumières de mesure partielles.

21. Dispositif selon la revendication 20, dans lequel le dispositif (1) comprend une fibre optique (16) dotée d'un point de couplage optique (17) destiné au couplage entrant et sortant de la lumière de mesure, et dans lequel l'au moins un masque perforé (60) est disposé au niveau du point de couplage optique (17).

22. Dispositif selon la revendication 20, dans lequel le dispositif comporte une première fibre optique (10) avec une extrémité de sortie de lumière (91) et une deuxième fibre optique (13) avec une extrémité d'entrée de lumière (92), et dans lequel un premier masque perforé (60) est disposé au niveau de l'extrémité de sortie de lumière (91) et un deuxième masque perforé (60) est disposé au niveau de l'extrémité d'entrée de lumière (92).
